(19) Europäisches Patentamt
European Patent Office
Office européen des brevets

(11) **EP 4 350 303 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **23201835.8**

(22) Anmeldetag: **05.10.2023**

(51) Internationale Patentklassifikation (IPC):
***G01D 5/347*** *(2006.01)* ***B23K 26/364*** *(2014.01)*

(52) Gemeinsame Patentklassifikation (CPC):
**G01D 5/34746; B23K 26/364**

(54) **VERFAHREN ZUM AUFBRINGEN EINER MASSVERKÖRPERUNG AUF EINE OBERFLÄCHE EINER FÜHRUNGSSCHIENE EINER LINEAREN PROFILSCHIENENFÜHRUNG, MASSVERKÖRPERUNG FÜR EINEN LINEAR-ENCODER UND LINEAR-ENCODER**

METHOD OF APPLYING A MATERIAL MEASURE TO A SURFACE OF A GUIDE RAIL OF A LINEAR PROFILE GUIDE, MATERIAL MEASURE FOR A LINEAR ENCODER AND LINEAR ENCODER

PROCÉDÉ D'APPLICATION D'UN CORPS DE MESURE SUR UNE SURFACE D'UN RAIL DE GUIDAGE LINÉAIRE, RAIL DE MESURE POUR UN CODEUR LINÉAIRE ET CODEUR LINÉAIRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.10.2022 EP 22199909**

(43) Veröffentlichungstag der Anmeldung:
**10.04.2024 Patentblatt 2024/15**

(73) Patentinhaber: **Schneeberger Holding AG
4914 Roggwil (CH)**

(72) Erfinder: **INFANGER, Roger
3507 Biglen (CH)**

(74) Vertreter: **EGLI-EUROPEAN PATENT ATTORNEYS
Giesshübelstrasse 62
8045 Zürich (CH)**

(56) Entgegenhaltungen:
EP-B1- 3 060 887    US-A1- 2007 240 325
US-A1- 2011 259 631

EP 4 350 303 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die vorliegende Erfindung betrifft allgemein Massverkörperungen für Linear-Encoder sowie ein optimiertes Verfahren zum Aufbringen einer Massverkörperung auf eine Oberfläche einer Führungsschiene einer linearen Profilschienenführung.

### Stand der Technik

Massverkörperungen sind dem Prinzip nach aus dem Stand der Technik bekannt. Diese finden insbesondere bei Inkrementalgebern Anwendung. Hierbei handelt es sich um Sensoren zum Erfassen von Lageänderungen (linear) oder Winkeländerungen (rotierend), die eine Wegstrecke und Wegrichtung bzw. Winkelveränderung und Drehrichtung erfassen können. Die bekannten Massverkörperungen von Inkrementalgebern weisen sich periodisch wiederholende Streu- oder Absorptionsbereiche auf, welche von einer Sensorvorrichtung gezählt werden, um die Lageänderung zu erfassen.

So ist beispielsweise aus der Druckschrift DE 2 515 574 eine Massverkörperung aus Metall bekannt, welche Streubereiche aus einer Vielzahl von Strichelementen aufweist. Die Strichelemente sind parallel und schmal, wobei deren Breite und Tiefe so bemessen sind, dass die Strichelemente eines Streubereichs in sichtbarem Licht nicht einzeln unterscheidbar sind, sondern nur durch ihr Beugungsbild erkennbar sind.

Mit anderen Worten, jeder der aus der DE 2 515 574 bekannten Streubereiche besteht aus einer Vielzahl von linienartigen, unmittelbar nebeneinander angeordneten Vertiefungen (Strichelementen) mit einer Breite der Größenordnung von 1 $\mu$m (vorzugsweise 0,5 bis 1,5 $\mu$m) und einer Tiefe, welche etwa 1,5 $\mu$m beträgt und sich somit in der Größenordnung einer Wellenlänge des Lichts befindet, mit welchem die bekannte Massverkörperung im Auflichtverfahren, zum Beispiel unter einem fotoelektrischen Mikroskop, beleuchtet wird.

Wie es aus beispielsweise der Druckschrift DE 10 2007 007 311 ersichtlich ist, wird im Auflichtverfahren ein Lichtstrahl durch einen Kollimator auf eine mit einer reflektiven Massverkörperung versehene Oberfläche gelenkt, so dass die Oberfläche bzw. die Massverkörperung mit im Wesentlichen parallel gebündeltem Licht beleuchtet wird, wobei das Licht unter einem (Einfalls-) Winkel zur Oberflächennormalen einfällt. Die Massverkörperung umfasst dabei strukturierte Bereiche, welche mit diffraktiven Phasengitter-Strukturen in Form von Liniengittern strukturiert sind, und unstrukturierte Bereiche, welche jeweils durch eine glatte (spiegelnde) Oberfläche gebildet sind.

Der Einfallswinkel des auf die Oberfläche einfallenden Lichts ist dabei vorzugsweise so gewählt, dass an den diffraktiven Phasengitter-Strukturen in strukturierten Bereichen Licht derart gebeugt wird, dass eine Beugungsordnung des gebeugten Lichts die Massverkörperung senkrecht verlässt. Unter diesen Umständen wird das auf die unstrukturierten Bereiche einfallende Licht jeweils an der Oberfläche reflektiert, so dass es die unstrukturierten Bereiche (im Folgenden auch "Spiegelbereiche" genannt) unter einem Ausfallswinkel zur Oberflächennormalen verlässt, welcher gleich dem Einfallswinkel ist. Das im Wesentlichen senkrecht zur Oberfläche an den strukturierten Bereichen gebeugte Licht wird sodann auf die Fotosensoren einer Sensorvorrichtung abgebildet, wobei die Sensorvorrichtung vorzugsweise so angeordnet ist, dass das an den unstrukturierten Bereichen (Spiegelbereichen) reflektierte Licht nicht von den Fotosensoren der Sensorvorrichtung erfasst wird.

Demnach sind mittels der Sensorvorrichtung die strukturierten Bereiche als Hellfelder und die unstrukturierten Bereiche (Spiegelbereiche) als Dunkelfelder detektierbar.

Wird die Sensorvorrichtung an der Inkrementalspur entlang verschoben, so erfasst die Sensorvorrichtung vor allem das an den strukturierten Bereichen gebeugte Licht (Dunkelfeldmessung der strukturierten Bereiche). Die strukturierten Bereiche und die unstrukturierten Bereiche (Spiegelbereiche) sind jeweils miteinander alternierend in einer Reihe hintereinander angeordnet und bilden gemeinsam eine Inkrementalspur. Die strukturierten Bereiche sind dabei in konstanten Abständen angeordnet und werden durch die Spiegelbereiche voneinander getrennt. Demzufolge wird durch jeden der strukturierten Bereiche jeweils eine sogenannte Markierung gebildet, wobei die jeweiligen Markierungen der Inkrementalspur von der Sensorvorrichtung gezählt und in ein sich periodisch veränderndes Sensorsignal umgewandelt werden können, falls die Sensorvorrichtung relativ zu den Markierungen in Längsrichtung der Inkrementalspur bewegt wird.

Das periodische Sensorsignal kann von einer Rechnereinheit dazu verwendet werden, die Verschiebung entlang der Massverkörperung zu berechnen. Da sich das Sensorsignal bei einer Bewegung der Sensorvorrichtung in Längsrichtung der Inkrementalspur periodisch verändert, ist es möglich, bei einer Bewegung der Sensorvorrichtung in Längsrichtung der Inkrementalspur an verschiedenen Positionen der Sensorvorrichtung das jeweilige Sensorsignal zu messen und somit verschiedenen Positionen der Sensorvorrichtung verschiedene Messwerte für das Sensorsignal zuzuordnen. Eine Interpolation zwischen verschiedenen Messwerten für die Sensorsignale, welche jeweils verschiedenen vorgegebenen Positionen der Sensorvorrichtung bezüglich der Inkrementalspur zugeordnet sind, ermöglicht schließlich eine Bestimmung einer beliebigen Position der Sensorvorrichtung (zwischen jeweils zwei der vorgegebenen Positionen der Sensorvorrichtung) mit einer hohen Genauigkeit.

Zur Erhöhung des Sensorsignals ist es möglich, die Massverkörperung gleichzeitig mit Licht aus zwei verschiedenen Lichtquellen zu beleuchten, welche nebeneinander angeordnet sind, so dass Licht aus zwei verschiedenen Richtungen (jeweils unter einem Winkel zur Oberflächennormalen) auf die Oberfläche bzw. die Massverkörperung fällt.

Die aus dem Stand der Technik bekannten Massverkörperungen haben den Nachteil, dass das von der Sensorvorrichtung erfasste Sensorsignal häufig nur einen geringen Kontrast aufweist, d.h. die Sensorvorrichtung erzeugt durch Abtasten der Streu- oder Absorptionsbereiche und der Spiegelbereiche jeweils Sensorsignale derart, dass ein durch Abtastung eines Streu- oder Absorptionsbereichs erzeugtes Sensorsignal und ein durch Abtastung eines Spiegelbereichs erzeugtes Sensorsignal sich verhältnismäßig wenig unterscheiden und dementsprechend einen verhältnismäßig kleinen Unterschied (Kontrast) aufweisen.

Dies kann wiederum dazu führen, dass einzelne Streu- oder Absorptionsbereiche nicht ausreichend erkannt werden und die Verschiebung der Sensorvorrichtung gegenüber der Massverkörperung unzureichend erfasst wird. Ferner wird es bei den aus dem Stand der Technik bekannten Massverkörperungen als problematisch angesehen, dass die Sensorsignale, welche durch eine Reflexion an der Massverkörperung erhältlich sind, eine zu geringe Interpolierbarkeit aufweisen.

Insbesondere besteht ein Bedarf dahingehend, ein Wegmesssystem, welches nach dem Prinzip der Hellfeld-Messung arbeitet, anzugeben, wobei eine Lageänderung mittels eines "im Hellfeld" angeordneten Detektors in zuverlässiger Weise erfassbar ist. Hellfeld-Messung bedeutet, dass der Detektor direkt von der an den Spiegelbereichen reflektierten Strahlung erreicht wird, wenn im Messbereich des Wegmesssystems kein Streu- oder Absorptionsbereich einer Massverkörperung vorhanden ist.

Das bedeutet insbesondere, dass die Lichtquelle die auf der Massverkörperung angebrachte Skala parallel zum Strahlengang des Sensors anstrahlt, was sich von einer Dunkelfeldbeleuchtung unterscheidet, bei der die Skala in etwa in einem Winkel von 45° angestrahlt wird. Die Funktionsweise des eingesetzten Encoders des nach dem Prinzip der Hellfeld-Messung arbeitenden Wegmesssystems erfordert dabei eine regelmäßige (spiegelartige) Reflexion des von der Lichtquelle abgestrahlten Lichts an Spiegelbereichen der Massverkörperung. Möglichst jeder auf die Oberfläche der Massverkörperung einfallende Strahl soll in den jeweiligen Spiegelbereichen der Massverkörperung in demselben Winkel zur Oberflächennormalen reflektiert werden.

Lineare Profilschienenführungen umfassen in der Regel eine (lineare) Führungsschiene und mindestens einen bewegbaren Körper, welcher an der Führungsschiene derart geführt ist, dass er linear in Längsrichtung der Führungsschiene bewegbar ist. Bei derartigen Profilschienenführungen besteht in der Regel ein Interesse daran, die Position des an der Führungsschiene geführten und linear in Längsrichtung der Führungsschiene bewegbaren Körpers messtechnisch zu erfassen.

Zur messtechnischen Erfassung der Position des bewegbaren Körpers kann in diesem Fall ein Linear-Encoder dienen, welcher eine sich in der Längsrichtung der Führungsschiene erstreckende Massverkörperung und eine in Längsrichtung der Führungsschiene relativ zur Massverkörperung bewegbare Sensorvorrichtung zum Abtasten der jeweiligen Markierungen der Massverkörperung umfasst. Um eine messtechnische Erfassung der Position des bewegbaren Körpers der linearen Profilschienenführung zu ermöglichen, kann die Sensorvorrichtung derart bezüglich des bewegbaren Körpers angeordnet sein, dass sie zusammen mit dem bewegbaren Körper in Längsrichtung der Führungsschiene bewegbar ist.

Um eine vereinfachte Installation einer linearen Profilschienenführung in Kombination mit einem Linear-Encoder zur messtechnischen Erfassung der Position eines in der Längsrichtung der Führungsschiene der linearen Profilschienenführung bewegbaren Körpers zu ermöglichen, wurde u.a. vorgeschlagen, die Führungsschiene der linearen Profilschienenführung zusammen mit der Massverkörperung in der Form eines einzigen Werkstücks bereitzustellen und zu diesem Zweck die jeweiligen Markierungen der Massverkörperung direkt an einer Oberfläche der Führungsschiene mittels einer Bearbeitung der Oberfläche der Führungsschiene, beispielsweise durch eine Bearbeitung der Oberfläche mittels eines Laserstrahls, auszubilden.

Aus der Druckschrift EP 3060887 B1 ist eine Massverkörperung für einen Inkrementalgeber und ein Verfahren zur Herstellung einer Massverkörperung auf einer Metalloberfläche mittels eines gepulsten Lasers bekannt, wobei dieses Verfahren prinzipiell geeignet ist, eine entsprechende Massverkörperung an einer Oberfläche einer Führungsschiene einer linearen Profilschienenführung zu realisieren. Das in der Druckschrift EP 3060887 B1 offenbarte Verfahren ist konzipiert für einen Inkrementalgeber mit einer Massverkörperung, welche eine Inkrementalspur mit in einer Längsrichtung alternierend angeordneten Streubereichen und Spiegelbereichen aufweist, wobei der Inkrementalgeber eine Sensorvorrichtung umfasst, welche dazu ausgebildet ist, die Inkrementalspur optisch abzutasten, und zu diesem Zweck einen relativ zu der Massverkörperung bewegbaren Messkopf mit einer optischen Abbildungseinrichtung zur Erzeugung eines Abbilds der Inkrementalspur sowie einer Vielzahl von Photosensoren zum Erfassen des Abbildes aufweist. Um eine optische Abtastung der Inkrementalspur zu ermöglichen, ist eine Beleuchtung der Inkrementalspur mit zwei Lichtquellen vorgesehen, welche Licht erzeugen, das auf die Streubereiche und Spiegelbereiche der Massverkörperung unter einem Winkel fällt, welcher so gewählt ist, dass direkt an den Spiegelbereichen der Massverkörperung reflektiertes Licht nicht auf die optische Abbildungseinrichtung trifft und somit nicht von den Photosensoren detektiert werden kann. Die Sensorvorrichtung ist stattdessen dazu ausgelegt, ausschliesslich Licht zu detektieren, welches an den Streubereichen der Massverkörperung im Wesentlichen senkrecht zu der Metalloberfläche gestreut wird, an welcher die Massverkörperung ausgebildet ist (was einer optischen Detektion der Streubereiche der Massverkörperung nach dem Prinzip einer Dunkelfeldmessung entspricht). Um zu erreichen, dass die Streubereiche der Massverkörperung von der Sensorvorrichtung mit einem möglichst grossen Kontrast im Vergleich zu den Spiegelbereichen detektiert werden können, wird in der Druckschrift EP 3060887 B1 vorgeschlagen, die Streubereiche der Massverkörperung an der Metalloberfläche durch eine Bearbeitung der Oberfläche mittels eines gepulsten Lasers derart herzustellen, dass jeder der Streubereiche mindestens zwei linienartige Vertiefungen aufweist, welche sich im Wesentlichen senkrecht zur Längsrichtung der Inkrementalspur erstrecken und in der Längsrichtung der Inkrementalspur in einer Reihe hintereinander angeordnet sind und dazu ausgebildet sind, einfallendes Licht diffus zu reflektieren, wobei jede einzelne der linienartigen Vertiefungen der Streubereiche jeweils aus einer Vielzahl im Wesentlichen runder Vertiefungen ausgebildet sind, welche einander überlappend angeordnet sind. Hinsichtlich der Abmessungen der linienartigen Vertiefungen eines Streubereichs der Anordnung der linienartigen Vertiefungen eines Streubereichs relativ zueinander wird in der Druckschrift EP 3060887 B1 vorgeschlagen, dass die Breite der linienartigen Vertiefungen in der Längsrichtung der Inkrementalspur und/oder die jeweiligen Abstände zwischen zwei benachbarten linienartigen Vertiefungen geeignet gewählt werden können, um zu erreichen, dass die räumliche Intensitätsverteilung des von den linienartigen Vertiefungen eines einzelnen Streubereichs diffus reflektierten Lichts verhältnismässig homogen sein kann und dass die Streubereiche der Massverkörperung von der Sensorvorrichtung bei einer in diesem Fall realisierten optischen Detektion der Streubereiche der Massverkörperung nach dem Prinzip einer Dunkelfeldmessung mit einem relativ grossen Kontrast im Vergleich zu den Spiegelbereichen detektiert werden können, wenn jede der linienartigen Vertiefungen - in der Längsrichtung der Inkrementalspur - eine Breite von 3,5 $\mu$m bis 12 $\mu$m, vorzugsweise 6 $\mu$m bis 9 $\mu$m, und insbesondere etwa 7 $\mu$m, aufweist und der Abstand zwischen zwei benachbarten parallelen, linienartigen Vertiefungen grösser als Null ist. Diesbezüglich wird in der Druckschrift EP 3060887 B1 insbesondere vorgeschlagen, dass die Streubereiche jeweils mindestens drei parallele, linienartige Vertiefungen aufweisen, welche senkrecht gegenüber der Längsrichtung der Inkrementalspur ausgerichtet und in einem Abstand von 6 bis 9 $\mu$m, vorzugsweise etwa 7,5 um voneinander beabstandet sind.

Eine aus der Druckschrift EP 3060887 B1 bekannte Massverkörperung erweist sich als problematisch im Falle einer optischen Abtastung der Massverkörperung nach dem Prinzip der Hellfeld-Messung. In diesem Fall wird das auf die Massverkörperung eingestrahlte Licht an den Spiegelbereichen derart reflektiert und an den einzelnen (jeweils aus mehreren linienartigen und voneinander beabstandeten Vertiefungen gebildeten) Streubereichen derart gestreut, dass die Streubereiche der Massverkörperung von der Sensorvorrichtung bei einer optischen Detektion der Streubereiche der Massverkörperung nach dem Prinzip einer Hellfeldmessung allenfalls mit einem geringen Kontrast im Vergleich zu den Spiegelbereichen detektiert werden können, was eine Auswertung der von der Sensorvorrichtung erzeugten Messsignale erschwert und bei einer Bewegung der Sensorvorrichtung in der Längsrichtung der Massverkörperung die Genauigkeit einer Bestimmung des von der Sensorvorrichtung in der Längsrichtung der Massverkörperung zurückgelegten Weges erheblich beeinträchtigt.

Die aus dem Stand der Technik bekannten Profilschienenführungen mit einer aus der Druckschrift EP 3060887 B1 bekannten Massverkörperung sind deshalb für eine optische Abtastung der Massverkörperung nach dem Prinzip der Hellfeld-Messung wenig geeignet.

Die Druckschrift US 2007/240325 A1 offenbart ein Verfahren zur Herstellung einer optischen Messskala zur Verwendung mit einem optischen Encoder, welches Verfahren umfasst: eine Erstellung einer Markierung der Skala durch Bestrahlung der Oberfläche eines reflektierenden, flexiblen Metallträgermaterials an einer vorher festgelegten Markierungsposition mit einer Reihe von räumlich überlappenden Pulsen von einem Laser, wobei jeder Puls eine zweidimensionale Pulsintensitätsverteilung hat; eine Änderung der relativen Position des Lasers und des Trägermaterials durch eine Verschiebung, die eine nächste Markierungsposition auf dem Trägermaterial, an der die nächste Markierung der Skala erstellt werden soll, definiert; und eine Wiederholung der Markierungserstellung und Positionsänderungsschritte für aufeinanderfolgende Markierungen einer Vielzahl von Markierungen der Skala. Um mit diesem Verfahren Markierungen unterschiedlicher Breite zu erstellen, ist es möglich, Laserpulse zu verwenden, deren Pulsintensitätsverteilung auf der Oberfläche des Metallträgermaterials unterschiedliche Breiten aufweisen. Alternativ ist vorgesehen, zum Erstellen einer breiteren Markierung der Messskala mehrere schmalere Markierungen derart zu erstellen, sodass die mehreren schmaleren Markierungen unmittelbar nebeneinander erstellt werden.

## Zusammenfassung der Erfindung

Auf Grundlage dieser Problemstellung liegt somit der Erfindung die Aufgabe zu Grunde, ein optimiertes Verfahren zum Aufbringen einer Massverkörperung auf eine Oberfläche einer Führungsschiene einer linearen Profilschienenführung anzugeben, wobei die Massverkörperung für eine Verwendung als Bestandteil eines Linear-Encoders geeignet ist, welcher auf einer optischen Abtastung der Massverkörperung nach dem Prinzip der Hellfeld-Messung beruht und ausgeführt ist, in zuverlässiger Weise die Erfassung einer Lageänderung zu ermöglichen.

Des Weiteren soll eine entsprechende Massverkörperung und ein entsprechender Linear-Encoder angegeben werden.

Im Hinblick auf das Verfahren wird die der Erfindung zu Grunde liegende Aufgabe durch den Gegenstand des unabhängigen Patentanspruchs 1 gelöst. Im Hinblick auf die Massverkörperung wird die der Erfindung zu Grunde liegende Aufgabe durch den Patentanspruch 10 und im Hinblick auf den Linear-Encoder durch den Patentanspruch 13 gelöst.

Das Verfahren dient zum Aufbringen einer Massverkörperung auf einer Oberfläche einer Führungsschiene einer linearen Profilschienenführung, wobei die Führungsschiene eine erste Seitenoberfläche und eine gegenüberliegende zweite Seitenoberfläche aufweist, wobei die Massverkörperung mindestens eine sich linear in Längsrichtung der Führungsschiene erstreckende Spur mit mehreren hintereinander alternierend angeordneten Spiegelbereichen und Markierungsbereichen umfasst, wobei jeder der Markierungsbereiche sich linienartig quer zur Längsrichtung der mindestens einen Spur erstreckt, und wobei das Verfahren die folgenden Verfahrensschritte aufweist:

- Bereitstellen eines gepulsten Lasers zum Erzeugen eines Laserstrahls; und
- Bereitstellen mindestens einer der Markierungsbereiche durch Einbringen einer Mikrostruktur in einem dem mindestens einen Markierungsbereich entsprechenden ersten Bereich der ersten Seitenoberfläche der Führungsschiene, indem:

der Laser den Laserstrahl mit einer Folge von mehreren Lichtpulsen erzeugt und der Laserstrahl derart auf den ersten Bereich der ersten Seitenoberfläche gerichtet wird, dass mittels jedes einzelnen Lichtpulses der erzeugten Folge von mehreren Lichtpulsen lediglich ein Teilbereich des ersten Bereichs derart bestrahlt wird, dass die erste Seitenoberfläche in dem vom jeweiligen einzelnen Lichtpuls bestrahlten Teilbereich des ersten Bereichs aufgrund der Bestrahlung mit dem jeweiligen einzelnen Lichtpuls derart verändert wird, dass die erste Seitenoberfläche nach der Bestrahlung mit dem jeweiligen einzelnen Lichtpuls eine räumliche Modulation der ersten Seitenoberfläche aufweist, welche sich über den von dem jeweiligen einzelnen Lichtpuls bestrahlten Teilbereich des ersten Bereichs erstreckt, wobei die räumliche Erstreckung des von dem jeweiligen einzelnen Lichtpuls bestrahlten Teilbereichs des ersten Bereichs in der Längsrichtung der mindestens einen Spur kleiner als die räumliche Erstreckung des ersten Bereichs in der Längsrichtung der mindestens einen Spur ist und dass die räumliche Erstreckung des von dem jeweiligen einzelnen Lichtpuls bestrahlten Teilbereichs quer zur Längsrichtung der mindestens einen Spur kleiner als die räumliche Erstreckung des ersten Bereichs quer zu der Längsrichtung der mindestens einen Spur ist;

der Laserstrahl relativ zur Führungsschiene bewegt wird, sodass zumindest mehrere der Lichtpulse der erzeugten Folge von mehreren Lichtpulsen zeitlich nacheinander mehrere verschiedene Teilbereiche des ersten Bereichs bestrahlen, welche relativ zueinander räumlich verteilt angeordnet sind.

Dabei ist zu jedem einzelnen der mehreren verschiedenen bestrahlten Teilbereiche mindestens ein anderer der mehreren verschiedenen bestrahlten Teilbereiche vorhanden, welcher zu dem jeweiligen einzelnen der mehreren verschiedenen bestrahlten Teilbereiche in der Längsrichtung der mindestens einen Spur und/oder quer zu der Längsrichtung der mindestens einen Spur derart versetzt ist, dass der jeweilige einzelne der mehreren verschiedenen bestrahlten Teilbereiche und der mindestens eine andere der mehreren verschiedenen bestrahlten Teilbereiche eine Überlappung aufweisen, wobei die mehreren verschiedenen bestrahlten Teilbereiche zusammen einen Bereich der ersten Seitenoberfläche bilden, welcher mit dem ersten Bereich deckungsgleich ist.

Insbesondere sind zu jedem einzelnen der mehreren verschiedenen bestrahlten Teilbereiche mindestens zwei andere der mehreren verschiedenen bestrahlten Teilbereiche vorhanden, welche zu dem jeweiligen einzelnen der mehreren verschiedenen bestrahlten Teilbereiche derart räumlich versetzt sind, dass einer der mindestens zwei anderen der mehreren verschiedenen bestrahlten Teilbereiche relativ zu dem jeweiligen einzelnen der mehreren verschiedenen bestrahlten Teilbereiche quer zu der Längsrichtung der mindestens einen Spur versetzt ist und der eine der mindestens zwei anderen der mehreren verschiedenen bestrahlten Teilbereiche und der jeweilige einzelne der mehreren verschiedenen bestrahlten Teilbereiche (quer zur Längsrichtung der mindestens einen Spur) eine Überlappung aufweisen, und dass der andere der mindestens zwei anderen der mehreren verschiedenen bestrahlten Teilbereiche relativ zu dem jeweiligen einzelnen der mehreren verschiedenen bestrahlten Teilbereiche in der Längsrichtung der mindestens einen Spur versetzt ist und der andere der mindestens zwei anderen der mehreren verschiedenen bestrahlten Teilbereiche und der jeweilige einzelne der mehreren verschiedenen bestrahlten Teilbereiche (in der Längsrichtung der mindestens einen Spur) eine Überlappung aufweisen.

Bei dem erfindungsgemässen Verfahren wird der Laserstrahl zweidimensional über einen einem Markierungsbereich der aufzubringenden Massverkörperung entsprechenden ersten Bereich der ersten Seitenoberfläche der Führungsschiene bewegt, sodass nacheinander verschiedene Teilbereiche des ersten Bereichs der ersten Seitenoberfläche bestrahlt werden. Die Bestrahlung eines Teilbereichs mit einem der Lichtpulse bewirkt lokal ein geringfügiges Abtragen und/oder eine räumliche Umverteilung des die erste Seitenoberfläche der Führungsschiene bildenden Werkstoffs, sodass die Form der Oberfläche im bestrahlten Teilbereich nach der Bestrahlung mit einem Lichtpuls verändert wird.

Die Bezeichnung "mit dem jeweiligen einzelnen Lichtpuls bestrahlten Teilbereich des ersten Bereichs" soll in diesem Zusammenhang denjenigen Teilbereich der ersten Seitenoberfläche bezeichnen, in welchem die Form der Oberfläche im bestrahlten Teilbereich aufgrund der Bestrahlung mit dem jeweiligen einzelnen Lichtpuls eine Veränderung in Form einer räumlichen Modulation aufweist (im Vergleich zur Oberfläche vor der Bestrahlung mit dem jeweiligen einzelnen Lichtpuls). Es sei darauf hingewiesen, dass die räumliche Erstreckung eines Teilbereichs der ersten Seitenoberfläche, in welchem die Form der Oberfläche im bestrahlten Teilbereich aufgrund der Bestrahlung mit dem jeweiligen einzelnen Lichtpuls verändert wird, von der Intensität des jeweiligen Lichtpulses abhängen kann.

Dadurch, dass der Laserstrahl über den ersten Bereich der ersten Seitenoberfläche der Führungsschiene derart bewegt wird, dass jeder der verschiedenen bestrahlten Teilbereiche eine Überlappung mit mindestens einem anderen der bestrahlten Teilbereiche aufweisen muss, wird erreicht, dass die erste Seitenoberfläche der Führungsschiene im ersten Bereich nach der Bestrahlung mit den Lichtpulsen eine räumliche Modulation aufweist, sodass die erste Seitenoberfläche im ersten Bereich - im Vergleich zu ihrem Zustand vor der Bestrahlung mit den Lichtpulsen - eine erhöhte Rauigkeit aufweist. Die Bestrahlung des ersten Bereichs mit den Lichtpulsen ermöglicht eine Mikrostrukturierung der ersten Seitenoberfläche derart, dass eine vor der Bestrahlung glatte Oberfläche nach der Bestrahlung im gesamten ersten Bereich eine Anordnung von Erhebungen ("Mikrostruktur") aufweist, welche eine im Wesentlichen gleichmässige Aufrauung der Oberfläche repräsentiert.

Diese Aufrauung der Oberfläche verändert das Reflexionsvermögen der Oberfläche im bestrahlten ersten Bereich derart, dass senkrecht zur Oberfläche eintreffendes Licht im bestrahlten ersten Bereich der Oberfläche im Wesentlichen nicht senkrecht zur Oberfläche zurückreflektiert wird, sondern zwischen den einzelnen im bestrahlten ersten Bereich erzeugten Erhebungen vielfach gestreut und absorbiert wird.

Die mit jeweils einem einzelnen Lichtpuls bestrahlten Teilbereiche des ersten Bereichs sind räumlich derart verteilt, dass jeder mit einem einzelnen Lichtpuls bestrahlte Teilbereich Überlappungen mit mindestens zwei anderen mit jeweils einem einzelnen Lichtpuls bestrahlten Teilbereichen aufweist. Die jeweiligen Teilbereiche sind relativ zueinander räumlich derart versetzt, dass jeder der mit einem Lichtpuls bestrahlten Teilbereiche jeweils eine Überlappung mit einem anderen, in der Längsrichtung der mindestens einen Spur versetzten Teilbereich und ausserdem eine Überlappung mit einem anderen, jeweils quer zur Längsrichtung der mindestens einen Spur versetzten Teilbereich aufweist. Die mit jeweils einem einzelnen Lichtpuls bestrahlten Teilbereiche des ersten Bereichs weisen demnach Überlappungen in zwei Dimensionen auf (d.h. sowohl in der Längsrichtung der mindestens einen Spur als auch quer zur Längsrichtung der mindestens einen Spur). Aufgrund der Überlappungen in zwei Dimensionen wird erreicht, dass das Reflexionsvermögen der Oberfläche im bestrahlten ersten Bereich besonders stark reduziert wird.

Die mit dem erfindungsgemäßen Verfahren hergestellte Massverkörperung weist deshalb den Vorteil auf, dass die einzelnen Markierungsbereiche der Massverkörperung senkrecht zur Oberfläche einfallendes Licht im Wesentlichen absorbieren. Eine zur optischen Abtastung bereitgestellte Sensorvorrichtung eines Linear-Encoders ist unter diesen Umständen in der Lage, im Wesentlichen ausschliesslich Licht zu detektieren, welches an den Spiegelbereichen reflektiert wurde.

Die Markierungsbereiche der Massverkörperung könnten deshalb vorteilhafterweise von der Sensorvorrichtung bei einer optischen Detektion der Markierungsbereiche nach dem Prinzip einer Hellfeldmessung mit einem relativ grossen Kontrast im Vergleich zu den Spiegelbereichen detektiert werden.

Erfindungsgemäß werden demnach insbesondere Mikrostrukturen in den jeweiligen Markierungsbereichen der Massverkörperung in die erste Seitenoberfläche der Führungsschiene mit Hilfe des gepulsten Lasers derart eingebracht, dass dies zu einer dunklen, kontrastreichen Ausbildung der Oberfläche ohne Abtrag von Material führt. Extrem kurze Lichtpulse führen auf der Oberfläche der Führungsschiene zu Strukturen mit einer Vielzahl von Erhebungen im Nanometerbereich. Die mikrostrukturierte Oberfläche sorgt dafür, dass die Streuung des Lichts reduziert wird und eine permanent tiefe und blickstabile Schwärzung der Oberfläche in den jeweiligen Markierungsbereichen der Massverkörperung entsteht.

Mit anderen Worten, erfindungsgemäß wird die hochreflektierende Metalloberfläche der Führungsschiene durch hochenergetische Strahlung (Laserstrahlung) partiell aufgeraut, um Absorptionsbereiche innerhalb der Metalloberfläche vorzusehen. Im Einzelnen wird die Metalloberfläche dabei durch kurze Laserimpulse mit hochenergetischer Laserstrahlung angeschmolzen. Insbesondere werden die Aufrauungsbereiche durch kurze Laserimpulse von der Dauer von < 15 Nanosekunden angeschmolzen, wonach es in den Impulspausen zur sofortigen Wiedererstarrung der Oberfläche kommt.

Sind die zum Einbringen der Mikrostrukturen in den Markierungsbereichen genutzten Lichtpulse ultrakurz (d.h.

mit einer Pulsdauer von 20 Pikosekunden oder weniger als 20 Pikosekunden), bleibt die Farbänderung in bestimmten Parameterbereichen zudem korrosionsbeständig. Der Grund hierfür ist, dass durch den Einsatz von Ultrakurzpulslasern die Wärmeeinflusszone äußerst klein ist, so dass sich eine selbstheilende Oxidschicht im Aufrauungsbereich bilden kann.

Der Vorteil des erfindungsgemäßen Verfahrens zum Aufbringen einer Massverkörperung auf eine Oberfläche der Führungsschiene ist insbesondere darin zu sehen, dass die eingebrachte Mikrostruktur die so genannte Blickwinkelstabilität aufweist. Der sehr hohe, gleichmäßige Kontrast aus allen Blickwinkeln ist auf die Nanostrukturen zurückzuführen, die beim Einbringen der Mikrostruktur in die erste Seitenoberfläche der Führungsschiene erzeugt werden, und die das Licht mehrfach gestreut reflektieren und absorbieren.

Durch das Einbringen der Mikrostruktur in die erste Seitenoberfläche der Führungsschiene mittels des gepulsten Lasers wird zudem eine deutliche Farbänderung am Metall hervorgerufen - bis hin zu einem tiefdunklen Schwarzton in den Markierungsbereichen.

Die Verwendung von Ultrakurzpulslasern führt zudem dazu, dass sehr kleine und feingliedrige Aufrauungsbereiche in die erste Seitenoberfläche eingebracht werden können. Die Pulsdauern sind beim Einsatz von Ultrakurzpulslasern rund 10.000-mal kürzer und dabei energiereicher, als bei sonstigen Markierlasern und die Aufrauungsbereiche können mit einer sehr kleinen Spotgröße aufgetragen werden. Daher eignet sich das erfindungsgemäße Verfahren insbesondere dazu, um filigrane Aufrauungsbereiche in der ersten Seitenoberfläche der Führungsschiene und um insbesondere filigrane Absorptionsbereiche der ersten Seitenoberfläche der Führungsschiene zu realisieren. Aufgrund der kurzen Einwirkzeit beim Verwenden eines Ultrakurzpulslasers bleibt die chemische Integrität der Oberfläche erhalten, so dass eine korrosionsbeständige Einbringung der Aufrauungsbereiche und somit eine korrosionsbeständige Ausbildung der Markierungsbereiche der Massverkörperung ermöglicht wird.

Somit ist gemäß bevorzugten Realisierungen des erfindungsgemäßen Verfahrens insbesondere vorgesehen, dass der Laser als Kurzpulslaser zur Erzeugung gepulsten Laserlichts mit Lichtpulsen mit Pulsdauern kleiner 15 Nanosekunden oder als Ultrakurzpulslaser zur Erzeugung gepulsten Laserlichts mit Lichtpulsen mit Pulsdauern kleiner 20 Pikosekunden ausgebildet ist. Die Pulsparameter des Lasers und/oder ein Laserfokus werden/wird derart gewählt, dass beim Einbringen der Mikrostruktur in die erste Seitenoberfläche der Führungsschiene ohne Materialabtrag oder zumindest ohne wesentlichem Materialabtrag entlang der Oberflächenbahnen eine Materialaufrauung im Nanometerbereich gebildet wird.

Die Verwendung eines Ultrakurzpulslasers macht es möglich, dass die Seitenoberfläche der Führungsschiene quasi ohne thermische und mechanische Beeinflussung bearbeitet werden kann. Der Lichtpuls - und damit die Dauer des Energieeintrags - ist so kurz, dass der Temperaturtransport zu den angrenzenden Atomen erst gar nicht zu Stande kommt und so auch thermische Spannungsrisse, die bei unangepasster Parameterwahl entstehen können, vermieden werden. Aus diesem Grund kann das Einbringen der Mikrostruktur in die erste Seitenoberfläche der Führungsschiene mittels eines Ultrakurzpulslasers auch als eine "kalte Bearbeitung" betrachtet werden, bei welcher durch den Laser das Material im Nanometerbereich strukturiert wird.

Der Laserstrahl kann beispielsweise ein im Wesentlichen rundes Strahlenbündel mit einem Durchmesser aufweisen, der derart gewählt wird, dass dieser auf der ersten Seitenoberfläche der Führungsschiene einen Durchmesser von 3,5 $\mu$m bis 12 $\mu$m, vorzugsweise 6 $\mu$m bis 9 $\mu$m und insbesondere etwa 8 $\mu$m aufweist.

Zum Einbringen der Mikrostruktur in dem einem Markierungsbereich entsprechenden ersten Bereich der ersten Seitenoberfläche der Führungsschiene kann der Laserstrahl derart auf den ersten Bereich der ersten Seitenoberfläche gerichtet werden, dass die Überlappung zwischen dem jeweiligen einzelnen der mehreren verschiedenen bestrahlten Teilbereiche und dem mindestens einen anderen der mehreren verschiedenen bestrahlten Teilbereiche in der Längsrichtung der mindestens einen Spur eine räumliche Erstreckung aufweist, welche 20-50 % der räumlichen Erstreckung des von dem jeweiligen einzelnen Lichtpuls bestrahlten Teilbereichs des ersten Bereichs in der Längsrichtung der mindestens einen Spur beträgt. Entsprechend kann der Laserstrahl derart auf den ersten Bereich der ersten Seitenoberfläche gerichtet werden, dass die Überlappung zwischen dem jeweiligen einzelnen der mehreren verschiedenen bestrahlten Teilbereiche und dem mindestens einen anderen der mehreren verschiedenen bestrahlten Teilbereiche quer zur Längsrichtung der mindestens einen Spur eine räumliche Erstreckung aufweist, welche 20-50 % der räumlichen Erstreckung des von dem jeweiligen einzelnen Lichtpuls bestrahlten Teilbereichs des ersten Bereichs quer zu der Längsrichtung der mindestens einen Spur beträgt. Aufgrund der vorstehend genannten Überlappung zwischen den verschiedenen bestrahlten Teilbereichen wird gewährleistet, dass die im ersten Bereich der ersten Seitenoberfläche eingebrachte Mikrostruktur eine Vielzahl kleiner Erhebungen umfasst, welche im Wesentlichen gleichmässig über die gesamte Fläche des ersten Bereichs räumlich verteilt sind und eine besonders fein strukturierte und homogene Aufrauung der Oberfläche über die gesamte Fläche des ersten Bereichs repräsentiert. Auf diese Weise wird erreicht, dass auf den jeweiligen Markierungsbereich einfallendes Licht auf der gesamten Fläche des ersten Bereichs im Wesentlichen gleichmässig absorbiert werden kann.

Um den mit der Massverkörperung erzielbaren Kontrast weiter zu optimieren, ist vorgesehen, dass vor dem Einbringen der Mikrostruktur in die erste Seitenoberfläche der Führungsschiene mit dem gepulsten Laserstrahl zumindest die erste Seitenoberfläche derart einer Oberflächenbehandlung unterzogen wird, dass insbesondere geringfügig Material von der ersten Seitenoberfläche abgetragen wird.

Alternativ oder zusätzlich hierzu ist vorgesehen, dass nach dem Einbringen der Mikrostruktur in die erste Seitenoberfläche der Führungsschiene mit dem Laserstrahl zumindest die erste Seitenoberfläche des Werkstücks einer Oberflächenreinigung unterzogen wird.

Mit diesen Maßnahmen sind hochreflektierende Spiegelbereiche der Massverkörperung realisierbar.

Insbesondere sollte in diesem Zusammenhang vor dem Einbringen der Mikrostrukturen in die erste Seitenoberfläche der Führungsschiene mit dem gepulsten Laserstrahl zumindest die erste Seitenoberfläche der Oberflächenbehandlung durch Polieren unterzogen werden. In diesem Zusammenhang ist es bevorzugt, dass die erste Seitenoberfläche nach deren Behandlung einen Mittenrauwert (Ra) von max. 0,3 $\mu$m, vorzugsweise einen Mittenrauwert (Ra) von max. 0,1 $\mu$m, und noch bevorzugter einen Mittenrauwert (Ra) in einem Bereich von etwa 0,007 $\mu$m bis 0,1 $\mu$m aufweist. Denkbar in diesem Zusammenhang ist es insbesondere, dass mittels Polierscheiben, mittels Laserpolieren und/oder mittels Elektropolieren zumindest die erste Seitenoberfläche der Oberflächenbehandlung unterzogen wird. Auf diese Weise wird erreicht, dass die erste Seitenoberfläche nach dem Polieren ein besonders hohes Reflexionsvermögen für Licht aufweist. Dementsprechend wird erreicht, dass nach dem Aufbringen der Massverkörperung mit dem gepulsten Laserstrahl auf der polierten ersten Seitenoberfläche die Spiegelbereiche der Massverkörperung ein besonders hohes Reflexionsvermögen für Licht aufweisen.

Nach einem Polieren der ersten Seitenoberfläche der Führungsschiene kann die Mikrostruktur mittels der Lichtpulse derart in die erste Seitenoberfläche eingebracht werden, dass die erste Seitenoberfläche nach dem Einbringen der Mikrostruktur in einem der Markierungsbereiche der Massverkörperung einen Mittenrauwert (Ra) aufweist, welcher um mehr als einen Faktor 10 grösser ist als der Mittenrauwert der Seitenoberfläche in einem der Spiegelbereiche der Massverkörperung. Auf diese Weise wird erreicht, dass die Markierungsbereiche der Massverkörperung von einer Sensorvorrichtung zur optischen Detektion der Markierungsbereiche nach dem Prinzip einer Hellfeldmessung mit einem besonders grossen Kontrast im Vergleich zu den Spiegelbereichen detektiert werden können.

Wie bereits ausgeführt, sollte vorzugsweise nach dem Einbringen der jeweiligen Mikrostrukturen in die erste Seitenoberfläche mit dem gepulsten Laserstrahl die erste Seitenoberfläche einer Oberflächenreinigung unterzogen werden. Hierbei handelt es sich insbesondere um eine Laserbehandlung und/oder eine Vibrationsreinigung oder eine Reinigung mit Ultraschall. Eine derartige Oberflächenreinigung ist insbesondere zweckmässig, wenn die Mikrostrukturen in den jeweiligen Markierungsbereichen mithilfe eines Kurzpulslasers aufgebracht werden, welcher gepulstes Laserlicht mit Lichtpulsen mit Pulsdauern im Bereich von Nanosekunden erzeugt. Bei einer Bearbeitung der ersten Seitenoberfläche mit Lichtpulsen mit Pulsdauern im Bereich von Nanosekunden hat das Auftreffen eines der Lichtpulse auf die erste Seitenoberfläche den Effekt, dass aufgrund der lokalen thermischen Belastung der Seitenoberfläche in dem von dem auftreffenden Lichtpuls bestrahlen Bereich die Struktur der Oberfläche in dem von dem auftreffenden Lichtpuls bestrahlten Bereich derart verändert wird, dass aus Atomen des die erste Seitenoberfläche bildenden Werkstoffs in dem von dem auftreffenden Lichtpuls bestrahlten Bereich eine Vielzahl von kleinen Partikels gebildet werden, welche nicht fest an die erste Seitenoberfläche gebunden sind, sondern lediglich lose an der ersten Seitenoberfläche haften. Die Bildung dieser nur lose an der ersten Seitenoberfläche haftenden Partikel beeinträchtigt lokal die mechanische und chemische Stabilität der ersten Seitenoberfläche in dem von dem auftreffenden Lichtpuls bestrahlten Bereich. Dadurch, dass nach dem Einbringen der jeweiligen Mikrostrukturen in die erste Seitenoberfläche mit dem gepulsten Laserstrahl die erste Seitenoberfläche einer Oberflächenreinigung unterzogen wird, kann erreicht werden, dass die in den von den Lichtpulsen bestrahlten Bereichen entstandenen, an der ersten Seitenoberfläche lose haftenden Partikel vollständig entfernt werden. Auf diese Weise kann die mechanische und chemische Stabilität der ersten Seitenoberfläche in den von auftreffenden Lichtpulsen bestrahlten Bereichen verbessert werden.

Im Hinblick auf die mit dem erfindungsgemäßen Verfahren erzeugbare Massverkörperung ist gemäß einer Weiterbildung der vorliegenden Erfindung insbesondere vorgesehen, dass die Führungsschiene mindestens eine und vorzugsweise eine Vielzahl von - von der zweiten Seitenoberfläche ausgehenden - Sackbohrungen mit vorzugsweise einem Innengewinde aufweist. Insbesondere sollte in diesem Zusammenhang die erste Seitenoberfläche des Werkstücks ohne Bohrungen versehen sein. Die Sackbohrungen dienen dazu, die Führungsschiene an einer Struktur mittels Schrauben zu befestigt, welche in die jeweiligen Sackbohrungen geschraubt werden können. Dadurch, dass die Sackbohrungen an der zweiten Seitenoberfläche ausgebildet sind und sich somit nicht bis an die erste Seitenoberfläche erstrecken, kann die gesamte erste Seitenoberfläche für die Ausbildung der Massverkörperung genutzt werden. Dies ermöglicht eine Bereitstellung einer mit einer Massverkörperung versehenen Führungsschiene mit einer besonders kleinen Querschnittsfläche und ist somit vorteilhaft im Hinblick auf eine Herstellung von Profilschienenführungen mit relativ kleinen Abmessungen quer zur Längsrichtung der jeweiligen Führungsschiene.

Die Massverkörperung kann derart ausgebildet sein, dass die mindestens eine sich linear in Längsrichtung der Führungsschiene erstreckende Spur als Inkrementalspur mit einer Mehrzahl von äquidistant angeordneten Markierungsbereichen ausgebildet ist.

Alternativ kann die Massverkörperung derart ausgebildet sein, dass die mindestens eine sich linear in Längsrichtung der Führungsschiene erstreckende Spur als Referenzspur mit mindestens einem Markierungsbereich zur Codierung mindestens einer Referenzposition oder als Referenzspur mit mehreren in Längsrichtung der Führungsschiene hintereinander angeordneten Markierungsbereichen zur Codierung mehrerer verschiedener Referenzpositionen ausgebildet ist.

Nach einer weiteren Ausführungsform weist die erfindungsgemäße Massverkörperung eine sich linear in Längsrichtung der Führungsschiene erstreckende erste Spur, welche als Inkrementalspur mit einer Mehrzahl von äquidistant angeordneten Markierungsbereichen ausgebildet ist, und ferner eine Referenzspur auf, welche parallel neben der ersten Inkrementalspur angeordnet ist und eine oder mehrere Markierungsbereiche zur Codierung einer oder mehreren Referenzpositionen aufweist. Die Referenzspur ist dabei insbesondere dazu ausgebildet, eine absolute Position eines Messkopfes entlang der Massverkörperung anzugeben. Um die jeweilige absolute Position des Messkopfes an einem beliebigen Ort zu bestimmen, kann beispielsweise eine Änderung der relativen Position (gemessen über die erste Inkrementalspur) des Messkopfes bezüglich einer bestimmten Referenzmarkierung der Referenzspur, gemessen werden. Somit ist es durch die Referenzspur möglich, dass der Linear-Encoder nicht nur eine Lageänderung des Messkopfes, sondern auch die absolute Position des Messkopfes mit Bezug auf die Längsrichtung der Massverkörperung bzw. der Führungsschiene erfasst.

Wie bereits erwähnt, ist die erfindungsgemäße Massverkörperung insbesondere dazu ausgebildet, in Verbindung mit einem Linear-Encoder verwendet zu werden, welcher eine optische Abtastung der Massverkörperung ermöglicht. Ein derartiger Linear-Encoder weist zumindest eine erfindungsgemäße Massverkörperung sowie eine Sensorvorrichtung, welche dazu ausgebildet ist die mindestens eine Spur der Massverkörperung optisch abzutasten, auf.

Die mindestens eine Sensorvorrichtung des Linear-Encoders kann dabei einen relativ zu der Massverkörperung bewegbaren Messkopf mit einer optischen Abbildungseinrichtung zur Erzeugung eines Abbilds der mindestens einen Spur sowie einer Vielzahl von Fotosensoren zum Erfassen des Abbildes aufweisen, wobei die Sensorvorrichtung vor allem derart ausgebildet sein kann, dass die Fotosensoren beim Erfassen des Abbilds ein Ausgangssignal erzeugen. Bei einer Änderung der Position des Messkopfs mit Bezug auf die Längsrichtung der Führungsschiene variiert das von den Fotosensoren erzeugte Ausgangssignal entsprechend der jeweiligen Anordnung der verschiedenen Markierungsbereiche der Massverkörperung in der Längsrichtung der Führungsschiene.

### Kurze Beschreibung der Zeichnungen

Im Folgenden werden Aspekte der vorliegenden Erfindung unter Bezugnahme auf die beiliegenden Zeichnungen näher beschrieben. Es zeigen:

FIG. 1 schematisch die Funktionsweise eines Wegmesssystems mit einem nach dem Prinzip der Hellfeld-messung arbeitenden Linear-Encoder zur Messung eines in Längsrichtung einer Führungsschiene einer linearen Profilschienenführung zurückgelegten Weges (dargestellt in einem Querschnitt senkrecht zur Längsrichtung der Führungsschiene);

FIG. 2 schematisch eine exemplarische Ausführungsform einer Anordnung von Markierungsbereichen einer auf der Oberfläche einer Führungsschiene einer Profilschienenführung aufgebrachten Massverkörperung für einen Linear-Encoder gemäss Fig. 1;

FIG. 3A eine schematische Darstellung eines ersten Markierungsbereichs der Massverkörperung gemäss Fig. 2 und einer Anordnung von Oberflächenbereichen der Führungsschiene, welche mit Lichtpulsen eines gepulsten Laserstrahls zu bestrahlen sind, um ein Bereitstellen des ersten Markierungsbereichs auf der Oberfläche der Führungsschiene gemäss der Erfindung zu ermöglichen;

FIG. 3B analog zu Fig. 3A eine schematische Darstellung eines zweiten Markierungsbereichs der Massverkörperung gemäss Fig. 2 und einer Anordnung von Oberflächenbereichen der Führungsschiene, welche mit Lichtpulsen eines gepulsten Laserstrahls zu bestrahlen sind, um ein Bereitstellen des zweiten Markierungsbereichs auf der Oberfläche der Führungsschiene gemäss der Erfindung zu ermöglichen;

FIG. 4 Draufsicht durch ein Mikroskop auf eine mittels des erfindungsgemäßen Verfahrens auf eine Oberfläche einer Führungsschiene einer Profilschienenführung aufgebrachte Massverkörperung;

FIG. 5 schematisch mittels des erfindungsgemäßen Verfahrens in der Seitenoberfläche einer Führungsschiene einer Profilschienenführung eingebrachte Markierungsbereiche vor einer Oberflächenreinigung;

FIG. 6 schematisch die Markierungsbereiche gemäß FIG. 5 nach Durchführung einer Oberflächenreinigung;

FIG. 7 einen Ausschnitt aus der Darstellung gemäss Fig. 4 zur vergrösserten Darstellung der Oberfläche der Führungsschiene im Bereich eines Markierungsbereichs mit einer Vergrösserung, welche im dargestellten Markierungsbereich eine Aufrauung der Oberfläche der Führungsbeschiene sichtbar macht.

**Beschreibung von Ausführungsformen**

Für dieselben Elemente in den Figuren sind jeweils dieselben Bezugzeichen verwendet, wenn nichts anderes erwähnt ist.

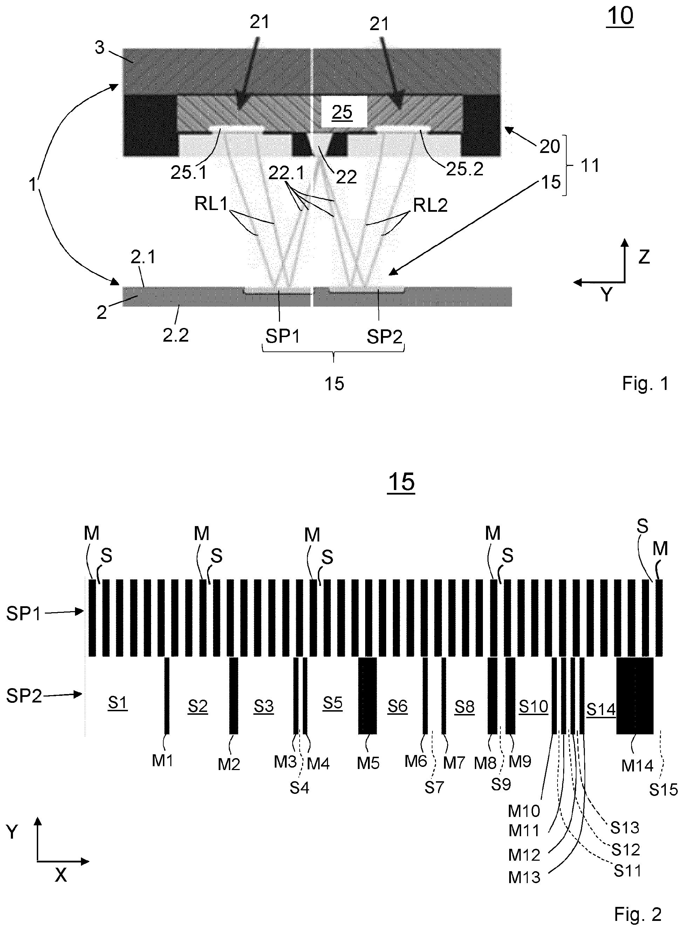

In FIG. 1 und 2 ist schematisch die Funktionsweise eines Wegmesssystems 10 zur Messung eines in Längsrichtung einer Führungsschiene 2 einer linearen Profilschienenführung 1 zurückgelegten Weges eines an der Führungsschiene 2 geführten, bewegbaren Körpers 3 der Profilschienenführung 1 dargestellt. Der bewegbare Körper 3 der Profilschienenführung 1 ist hierbei an der Führungsschiene 2 derart geführt, dass er linear in der Längsrichtung der Führungsschiene 2 bewegbar ist. Der bewegbare Körper 3 der Profilschienenführung 1 kann zu diesem Zweck beispielsweise über (in den Figuren nicht dargestellte) Wälzkörper auf die Führungsschiene 2 gestützt sein. In der Darstellung gemäss Fig. 1 und 2 ist angenommen, dass sich die X-Achse eines in Fig. 1 und 2 dargestellten kartesischen Koordinatensystem mit drei orthogonalen Achsen X, Y bzw. Z (X-Achse, Y-Achse bzw. Z-Achse) in Längsrichtung der Führungsschiene 2 erstreckt und der bewegbare Körper 3 somit linear in Richtung der X-Achse bewegbar ist.

Das Wegmesssystem 10 gemäss Fig. 1 und 2 weist einen nach dem Prinzip der Hellfeld-messung arbeitenden optischen Linear-Encoder 11 auf, welcher eine Messung eines von dem Körper 3 in Längsrichtung der Führungsschiene 2 zurückgelegten Weges ermöglicht. Der Linear-Encoder 11 umfasst zu diesem Zweck eine sich in Längsrichtung der Führungsschiene 2 erstreckende Massverkörperung 15 mit mindestens einer sich linear in Längsrichtung der Führungsschiene 2 erstreckenden Spur mit mehreren hintereinander alternierend angeordneten Spiegelbereichen und Markierungsbereichen und mindestens eine Sensorvorrichtung 20, welche dazu ausgebildet ist, die mindestens eine Spur der Massverkörperung 15 optisch abzutasten.

Wie in Fig. 1 angedeutet, ist die Massverkörperung 15 an einer ersten Seitenoberfläche 2.1 der Führungsschiene 2 ausgebildet. Um eine optische Abtastung der Massverkörperung 15 zu ermöglichen, umfasst die Sensorvorrichtung 20 einen in Längsrichtung der Führungsschiene 2 bewegbaren Messkopf 21, welcher am bewegbaren Körper 3 derart befestigt ist, dass der Messkopf 21 der mit der Massverkörperung 15 versehenen Seitenoberfläche 2.1 der Führungsschiene 2 gegenüberliegend angeordnet ist und bei einer Bewegung des bewegbaren Körpers 3 in Längsrichtung der Führungsschiene 2 mit dem bewegbaren Körper 3 mitbewegt wird.

Wie in Fig. 1 und 2 angedeutet, umfasst die Massverkörperung 15 zwei verschiedene, an der ersten Seitenoberfläche 2.1 angeordnete und sich parallel zueinander in Längsrichtung der Führungsschiene 2 erstreckende Spuren mit mehreren hintereinander alternierend angeordneten Spiegelbereichen und Markierungsbereichen: eine erste Spur SP1, welche als Inkrementalspur mit einer Mehrzahl von äquidistant angeordneten Markierungsbereichen ausgebildet ist, und eine zweite Spur SP2, welche als Referenzspur ausgebildet ist und mindestens einen Markierungsbereich zur Codierung mindestens einer Referenzposition aufweist oder alternativ auch mehrere in Längsrichtung der Führungsschiene 2 hintereinander angeordnete Markierungsbereiche zur Codierung mehrerer verschiedener Referenzpositionen aufweisen kann.

Wie in Fig. 2 angedeutet, erstreckt sich jeder der Markierungsbereiche der ersten Spur SP1 und der zweiten Spur SP2 der Massverkörperung 15 an der ersten Seitenoberfläche 2.1 der Führungsschiene 2 jeweils linienartig in Richtung der in den Fig. 1 und 2 dargestellten Y-Achse, d.h. quer zur Längsrichtung der Massverkörperung 15 bzw. quer zur Längsrichtung der Führungsschiene 2.

Wie in Fig. 2 angedeutet, umfasst die erste Spur SP1 (Inkrementalspur) eine Mehrzahl von Markierungsbereichen M, welche hinsichtlich ihrer geometrischen Form und hinsichtlich ihrer räumlichen Erstreckung in Richtung der X-Achse und hinsichtlich ihrer räumlichen Erstreckung in Richtung der Y-Achse identisch sind. Zwischen zwei benachbarten, in Richtung der X-Achse unmittelbar hintereinander angeordneten Markierungsbereichen M ist jeweils ein Spiegelbereich S ausbildet, wobei alle Spiegelbereiche S der ersten Spur SP1 hinsichtlich ihrer räumlichen Erstreckung in Richtung der X-Achse und hinsichtlich ihrer räumlichen Erstreckung in Richtung der Y-Achse identisch sind.

Wie in Fig. 2 weiterhin angedeutet, umfasst die zweite Spur SP2 (Referenzspur) im vorliegenden Beispiel mehrere (hier beispielsweise insgesamt vierzehn) in der Längsrichtung der Führungsschiene 2 in einer Reihe hintereinander angeordnete Markierungsbereiche M1, M2, M3, M4, M5, M6, M7, M8, M9, M10, M11, M12, M13 bzw. M14.

Auch im Falle der zweiten Spur SP2 ist zwischen zwei benachbarten, in Richtung der X-Achse unmittelbar hintereinander angeordneten Markierungsbereichen jeweils ein Spiegelbereich ausbildet, sodass die vorstehend genannten Markierungsbereiche M1, M2, M3, M4, M5, M6, M7, M8, M9, M10, M11, M12, M13 bzw. M14 alternierend mit Spiegelbereichen S1, S2, S3, S4, S5, S6, S7, S8, S9, S10, S11, S12, S13, S14 bzw. S15 in einer Reihe hintereinander angeordnet sind. Die Markierungsbereiche M1, M2, M3, M4, M5, M6, M7, M8, M9, M10, M11, M12, M13 und M14 der zweiten Spur SP2 sind jedoch hinsichtlich ihrer räumlichen Erstreckung in Richtung der X-Achse nicht alle identisch miteinander. Ebenso sind die Spiegelbereiche S1, S2, S3, S4, S5, S6, S7, S8, S9, S10, S11, S12, S13, S14 und S15 hinsichtlich ihrer räumlichen Erstreckung in Richtung der X-Achse nicht alle identisch miteinander. Auf diese Weise ermöglichen die verschiedenen Markierungsbereiche und Spiegelbereiche der zweiten Spur SP2 eine Codierung mehrerer verschiedener Referenzpositionen, welche mehrere verschiedene absolute Positionen jeweils eindeutig definieren.

Der Messkopf 21 weist eine Lichtquelle 22 (beispielsweise eine LED) auf, mit welcher Licht in Form eines im Wesentlichen senkrecht auf die Seitenoberfläche 2.1 der Führungsschiene 2 gerichteten Lichtstahls 22.1 ausgestrahlt wird, sodass ein Teil des von der Lichtquelle 22 ausgestrahlten Lichts auf die erste Spur SP1 der Massverkörperung 15 und ein anderer Teil des von der Lichtquelle 22 ausgestrahlten Lichts 22.1 auf die zweite Spur SP2 der Massverkörperung 15 trifft. Die Funktionsweise des Linear-Encoders 11 erfordert eine regelmäßige (spiegelartige) Reflexion des von der Lichtquelle 22 abgestrahlten Lichts 22.1 an der Seitenoberfläche 2.1 der Führungsschiene 2, wobei möglichst jeder einfallende Strahl in demselben Winkel zur Oberflächennormalen reflektiert werden soll.

Wie in Fig. 1 angedeutet, wird derjenige Teil des von der Lichtquelle 22 ausgestrahlten Lichts 22.1, welches auf die erste Spur SP1 der Massverkörperung 15 trifft, an der ersten Spur SP1 reflektiert; das an der ersten Spur SP1 der Massverkörperung 15 reflektierte Licht ist in Fig. 1 durch Lichtstrahlen repräsentiert, welche mit "RL1" bezeichnet sind. Entsprechend wird derjenige Teil des von der Lichtquelle 22 ausgestrahlten Lichts 22.1, welches auf die zweite Spur SP2 der Massverkörperung 15 trifft, an der zweiten Spur SP2 reflektiert; das an der ersten Spur SP1 der Massverkörperung 15 reflektierte Licht ist in Fig. 1 durch Lichtstrahlen repräsentiert, welche mit "RL2" bezeichnet sind.

Wie in Fig. 1 weiterhin angedeutet, umfasst der Messkopf 21 einen elektronischen Lichtsensor-Chip 25, welcher dazu ausgebildet ist, das an der ersten Spur SP1 reflektierte Licht RL1 und das an der zweiten Spur SP2 reflektierte Licht RL2 zu detektieren und die räumliche Verteilung der Intensität des reflektierten Licht RL1 und die räumliche Verteilung der Intensität des reflektierten Licht RL2 zu analysieren.

Zu diesem Zweck umfasst der Lichtsensor-Chip 25 eine erste Anordnung 25.1 einer Mehrzahl von Fotosensoren zum Erfassen des an der ersten Spur SP1 der Massverkörperung 15 reflektierten Lichts RL1 und eine zweite Anordnung 25.2 einer Mehrzahl von Fotosensoren zum Erfassen des an der zweiten Spur SP2 der Massverkörperung 15 reflektierten Lichts RL2 und ausserdem (in den Figuren nicht dargestellte) weitere elektronische Elemente, welche dazu ausgebildet sind, entsprechende Ausgangssignale der ersten Anordnung **25.1** von Fotosensoren und/oder Ausgangssignale der zweiten Anordnung 25.2 von Fotosensoren auszuwerten.

Erfindungsgemäss ist die Massverkörperung 15 derart konzipiert, dass die einzelnen Markierungsbereiche, **d.h.** die Markierungsbereiche M der ersten Spur SP1 und die Markierungsbereiche M1, M2, M3, M4, M5, M6, M7, M8, M9, M10, M11, M12, M13 und M14 der zweiten Spur SP2, das von der Lichtquelle 22 ausgestrahlte und auf die jeweilige Markierungsbereiche auftreffende Licht 22.1 im Wesentlichen absorbieren und nicht in Richtung der ersten Anordnung 25.1 von Fotosensoren und/oder in Richtung der zweiten Anordnung 25.2 von Fotosensoren reflektieren. In diesem Fall besteht das an der ersten Spur SP1 der Massverkörperung 15 reflektierte Licht RL1 im Wesentlichen aus Licht, welches an den Spiegelbereichen S der ersten Spur SP1 reflektiert wurde. Entsprechend besteht das an der zweiten Spur SP2 der Massverkörperung 15 reflektierte Licht RL2 im Wesentlichen aus Licht, welches an den Spiegelbereichen S1, S2, S3, S4, S5, S6, S7, S8, S9, S10, S11, S12, S13, S14 und S15 der zweiten Spur SP2 reflektiert wurde.

Unter den vorstehend genannten Umständen weist die räumliche Verteilung der Intensität des an der ersten Spur SP1 der Massverkörperung 15 reflektierten Lichts RL1 in der Längsrichtung der Führungsschiene 2 eine räumliche Variation auf, welche der räumlichen Anordnung der Spiegelbereiche S der ersten Spur SP1 in der Längsrichtung der Führungsschiene 2 entspricht. Entsprechend weist die räumliche Verteilung der Intensität des an der zweiten Spur SP2 der Massverkörperung 15 reflektierten Lichts RL2 in der Längsrichtung der Führungsschiene 2 eine räumliche Variation auf, welche der räumlichen Anordnung der Spiegelbereiche S1, S2, S3, S4, S5, S6, S7, S8, S9, S10, S11, S12, S13, S14 und S15 der zweiten Spur SP2 in der Längsrichtung der Führungsschiene 2 entspricht.

Die erste Anordnung **25.1** von Fotosensoren umfasst eine (in der Fig. 1 nicht dargestellte) Vielzahl von Fotosensoren, welche in der Längsrichtung der Führungsschiene 2 in einer Reihe hintereinander angeordnet sind. Entsprechend umfasst die zweite Anordnung 25.2 von Fotosensoren eine (in der Fig. 1 nicht dargestellte) Vielzahl von Fotosensoren, welche in der Längsrichtung der Führungsschiene 2 in einer Reihe hintereinander angeordnet sind.

Wird der bewegbare Körper 3 in Längsrichtung der Führungsschiene 2 bewegt, dann werden auch die Anordnung **25.1** von Fotosensoren und die Anordnung 25.2 von Fotosensoren des Messkopfs 21 in Längsrichtung der ersten Spur SP1 bzw. der zweiten Spur SP2 der Massverkörperung 15 bewegt. In diesem Fall zeigt die von den einzelnen Fotosensoren der ersten Anordnung 25.1 von Fotosensoren erfasste Intensität des an der ersten Spur SP1 reflektierten Lichts RL1 bei der Bewegung des bewegbaren Körpers 3 in Längsrichtung der Führungsschiene 2 jeweils eine Variation als Funktion der Position des bewegbaren Körpers 3 mit Bezug auf die Längsrichtung der Führungsschiene **2.**

Da die erste Spur SP1 als Inkrementalspur ausgebildet ist und die Markierungsbereiche M der ersten Spur SP1 jeweils äquidistant hintereinander in der Längsrichtung der Führungsschiene 2 angeordnet sind, zeigt die von den einzelnen Fotosensoren der ersten Anordnung 25.1 von Fotosensoren erfasste Intensität des an der ersten Spur SP1 reflektierten Lichts RL1 bei der Bewegung des bewegbaren Körpers 3 in Längsrichtung der Führungsschiene 2 jeweils eine periodische Variation als Funktion der Position des bewegbaren Körpers 3 mit Bezug auf die Längsrichtung der Führungsschiene 2. Dementsprechend erzeugen die einzelnen Fotosensoren der ersten Anordnung 25.1 von Fotosensoren bei einer Bewegung des bewegbaren Körpers 3 in Längsrichtung der Führungsschiene 2 jeweils Ausgangsignale, welche periodisch variieren als Funktion der Position des bewegbaren Körpers 3 mit Bezug auf die Längsrichtung der Führungsschiene 2.

Grundsätzlich ist es möglich, die Fotosensoren der ersten Anordnung 25.1 von Fotosensoren derart auszubilden, dass die einzelnen Fotosensoren der ersten Anordnung 25.1 von Fotosensoren bei einer Bewegung des bewegbaren Körpers 3 in Längsrichtung der Führungsschiene 2 jeweils Ausgangsignale erzeugen, deren periodische Variation als Funktion der Position des bewegbaren Körpers 3 mit Bezug auf die Längsrichtung der Führungsschiene 2 dem Verlauf einer mathematischen SinusFunktion bzw. Cosinus-Funktion entspricht. Eine Auswertung der Ausgangssignale der Fotosensoren der ersten Anordnung 25.1 von Fotosensoren ermöglicht dementsprechend eine Bestimmung eines vom bewegbaren Körper 3 bei einer Bewegung in Längsrichtung der Führungsschiene 2 zurückgelegten Weges.

Wie erwähnt, ist die zweite Spur SP2 als Referenzspur ausgebildet, wobei die Markierungsbereiche M1, M2, M3, M4, M5, M6, M7, M8, M9, M10, M11, M12, M13 und M14 der zweiten Spur SP2 hinsichtlich ihrer räumlichen Erstreckung in Richtung der X-Achse nicht alle identisch miteinander sind und die Spiegelbereiche S1, S2, S3, S4, S5, S6, S7, S8, S9, S10, S11, S12, S13, S14 und S15 der zweiten Spur SP2 hinsichtlich ihrer räumlichen Erstreckung in Richtung der X-Achse ebenfalls nicht alle identisch miteinander sind.

In diesem Fall zeigt die von den einzelnen Fotosensoren der zweiten Anordnung 25.2 von Fotosensoren erfasste Intensität des an der zweiten Spur SP2 reflektierten Lichts RL2 bei der Bewegung des bewegbaren Körpers 3 in Längsrichtung der Führungsschiene 2 jeweils eine Variation als Funktion der Position des bewegbaren Körpers 3 mit Bezug auf die Längsrichtung der Führungsschiene 2, wobei diese Variation allerdings keinen periodischen Verlauf als Funktion der Position des bewegbaren Körpers 3 mit Bezug auf die Längsrichtung der Führungsschiene 2 aufweist.

Dementsprechend erzeugen die einzelnen Fotosensoren der zweiten Anordnung 25.2 von Fotosensoren bei einer Bewegung des bewegbaren Körpers 3 in Längsrichtung der Führungsschiene 2 jeweils Ausgangsignale, welche nicht periodisch variieren als Funktion der Position des bewegbaren Körpers 3 mit Bezug auf die Längsrichtung der Führungsschiene 2. Eine Auswertung der Ausgangssignale der Fotosensoren der zweiten Anordnung 25.2 von Fotosensoren ermöglicht dementsprechend eine Bestimmung einer absoluten Position des bewegbaren Körpers 3 mit Bezug auf die jeweiligen Positionen der Markierungsbereiche und Spiegelbereiche der zweiten Spur SP2 der Massverkörperung 15.

Als Werkstoff für Führungsschienen einer linearen Profilschienenführung wird in der Regel Stahl, insbesondere Edelstahl verwendet. Standardmäßig geschliffene (d.h. unpolierte) Oberflächen derartiger Führungsschienen haben in der Regel ein Profil, welches derart von einer ebenen Fläche abweichen kann, dass derartige Oberflächen eine eher diffuse Reflexion von Licht bewirken.

Würde das von der Lichtquelle 22 ausgestrahlten Licht 22.1 an den jeweiligen Spiegelbereichen der Massverkörperung 15 diffus reflektiert, so könnte dies die Messgenauigkeit des Wegmesssystems 10 beeinträchtigen.

Hinsichtlich einer Realisierung einer Massverkörperung 15 auf einer ersten Seitenoberfläche einer Führungsschiene 2 gemäss Fig. 1 und 2 ist es deshalb zweckmässig, dass vor dem Aufbringen der Massverkörperung 15 auf die Seitenoberfläche 2.1 der Führungsschiene 2 mittels des erfindungsgemässen Verfahrens zunächst die Seitenoberfläche 2.1 derart einer Oberflächenbehandlung unterzogen wird, dass insbesondere eine geringfügige Menge Material von der ersten Seitenoberfläche 2.1 der Führungsschiene 2 entfernt wird, um eine ursprünglich vorhandene Rauigkeit der Seitenoberfläche 2.1 zu reduzieren und dementsprechend die Seitenoberfläche 2.1 möglichst glatt bzw. eben auszubilden.

Zur Oberflächenbehandlung der Profilschienenführung wird die Oberfläche der Führungsschiene 2 im Bereich der Seitenoberfläche 2.1 vorzugsweise poliert. Das Polieren kann auf vielfältige Weise geschehen, insbesondere aber mittels einer Vorpolitur mit einer Keramik-Schleifscheibe mit sehr feiner Korngröße (400 oder feiner) und anschließendem Polieren mit einer auf Gummi- oder Kunstharzbasis gebundenen Polierscheibe. Alternative Fertigungsarten zum Polieren mittels Polierscheibe sind Laserpolieren oder Elektropolieren oder Polieren mittels Polierbürsten.

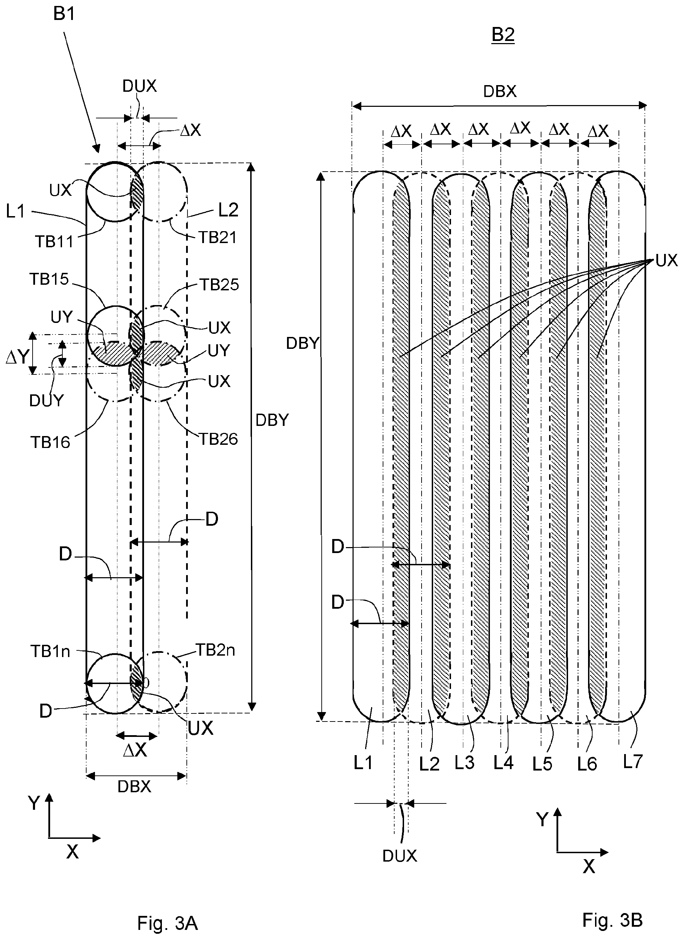

Nach einer derartigen Oberflächenbehandlung der Seitenoberfläche 2.1 werden schliesslich mithilfe eines gepulsten Lasers die einzelnen Markierungsbereiche der Massverkörperung 15 auf die erste Seitenoberfläche 2.1 der Führungsschiene 2 aufgebracht. Beispiele für das Aufbringen der einzelnen Markierungsbereiche der Massverkörperung 15 gemäss dem erfindungsgemässen Verfahren werden im Folgenden u.a. mit Bezug auf die Fig. 3A und 3B erläutert.

Fig. 3A zeigt (in einer Draufsicht auf die Seitenoberfläche 2.1) einen ersten Bereich B1 der Seitenoberfläche 2.1, in welchem die Seitenoberfläche 2.1 mithilfe eines gepulsten Lasers bearbeitet werden soll, um im ersten Bereich B1 eine Mikrostruktur auszubilden, welche einen der Markierungsbereiche der ersten Spur SP1 oder der zweiten Spur SP2 der Massverkörperung 15 repräsentiert.

Da sich die jeweiligen Markierungsbereiche der ersten Spur SP1 oder der zweiten Spur SP2 der Massverkörperung 15 jeweils linienartig quer zur Längsrichtung der Massverkörperung 15 (d.h. in Richtung der X-Achse gemäss Fig. 1 und 2) erstreckt, ist im Beispiel gemäss Fig. 3A angenommen, dass der erste Bereich B1 im Wesentlichen die Form eines Rechtecks hat, welches in der Längsrichtung der Massverkörperung 15 eine Erstreckung DBX und quer zur Längsrichtung der Massverkörperung 15 (d.h. in Richtung der Y-Achse gemäss Fig. 1 und 2) eine Erstreckung DBY aufweist.

Um im Bereich B1 eine Mikrostruktur einzubringen, welche einen der Markierungsbereiche der ersten Spur SP1 oder der zweiten Spur SP2 der Massverkörperung 15 repräsentiert, wird ein gepulster Laser zum Erzeugen eines Laserstrahls bereitgestellt, wobei der Laser den Laserstrahl mit einer Folge von mehreren Lichtpulsen erzeugt. Der Laserstrahl wird derart auf den ersten Bereich B1 der ersten Seitenoberfläche 2.1 gerichtet, dass mittels jedes einzelnen Lichtpulses der erzeugten Folge von mehreren Lichtpulsen lediglich ein Teilbereich des ersten Bereichs B1 bestrahlt wird.

Im Beispiel gemäss Fig. 3A ist angenommen, dass der Laserstrahl in einer Ebene senkrecht zur Ausbreitungsrichtung des Laserstrahl ein im Wesentlichen kreisrundes Strahlprofil mit einem Durchmesser DL aufweist, sodass ein einzelner Lichtimpuls des Laserstrahls beim Auftreffen auf die Seitenoberfläche 2.1 einen Bereich der Seitenoberfläche 2.1 mit Laserlicht bestrahlt, welcher die Form eines Kreises hat, wobei der Durchmesser dieses von einem einzelnen Lichtpuls bestrahlten Bereichs im vorliegenden Beispiel im Wesentlichen dem Durchmesser DL des Lasers entspricht.

Im vorliegenden Beispiel ist angenommen, dass die Seitenoberfläche 2.1 beim Auftreffen eines einzelnen Lichtimpulses des Laserstrahls auf die Seitenoberfläche 2.1 derart bestrahlt wird, dass die Seitenoberfläche 2.1 in einem kreisförmigen Bereich, welcher die Form eines einen Durchmesser D aufweisenden Kreises aufweist, aufgrund der Bestrahlung mit dem einzelnen Lichtimpuls derart verändert wird, dass die Seitenoberfläche 2.1 in dem vorstehend genannten kreisförmigen Bereich mit dem Durchmesser D eine Veränderung in Form einer räumlichen Modulation aufweist (im Vergleich zur Form der Oberfläche vor der Bestrahlung mit dem jeweiligen einzelnen Lichtpuls). Dementsprechend wird im Beispiel gemäss Fig. 3A ein "von dem jeweiligen einzelnen Lichtpuls bestrahlter Teilbereich des ersten Bereichs B1" jeweils als ein Bereich der Seitenoberfläche 2.1 dargestellt, welcher durch einen Kreis mit dem Durchmesser D begrenzt ist.

Im Beispiel gemäss Fig. 3A ist zusätzlich insbesondere angenommen, dass der Laserstrahl derart auf den ersten Bereich B1 der ersten Seitenoberfläche 2.1 gerichtet wird, dass die räumliche Erstreckung D des von dem jeweiligen einzelnen Lichtpuls bestrahlten Teilbereichs des ersten Bereichs B1 in der Längsrichtung der Massverkörperung 15 (d.h. in Richtung der X-Achse) kleiner als die räumliche Erstreckung DBX des ersten Bereichs B1 in der Längsrichtung der Massverkörperung 15 ist und dass die räumliche Erstreckung D des von dem jeweiligen einzelnen Lichtpuls bestrahlten Teilbereichs quer zur Längsrichtung der Massverkörperung 15 (d.h. in Richtung der Y-Achse) kleiner als die räumliche Erstreckung DBY des ersten Bereichs B1 quer zur Längsrichtung der Massverkörperung 15 ist.

Im Beispiel gemäss Fig. 3A wird der Laserstrahl relativ zur Führungsschiene 2 derart bewegt, dass zumindest mehrere der Lichtpulse der erzeugten Folge von mehreren Lichtpulsen zeitlich nacheinander mehrere verschiedene Teilbereiche des ersten Bereichs B1 bestrahlen, welche relativ zueinander räumlich verteilt angeordnet sind, wobei zu jedem einzelnen der mehreren verschiedenen bestrahlten Teilbereiche mindestens ein anderer der mehreren verschiedenen bestrahlten Teilbereiche vorhanden ist, welcher zu dem jeweiligen einzelnen der mehreren verschiedenen bestrahlten Teilbereiche in der Längsrichtung der Massverkörperung 15 (d.h. in Richtung der X-Achse) und/oder quer zu der Längsrichtung der Massverkörperung 15 (d.h. in Richtung der Y-Achse) derart versetzt ist, dass der jeweilige einzelne der mehreren verschiedenen bestrahlten Teilbereiche und der mindestens eine andere der mehreren verschiedenen bestrahlten Teilbereiche eine Überlappung aufweisen, und wobei die mehreren verschiedenen bestrahlten Teilbereiche zusammen einen Bereich der ersten Seitenoberfläche bilden, welcher mit dem ersten Bereich B1 deckungsgleich ist.

Demnach wird der Laserstrahl zweidimensional (d.h. in Richtung der X-Achse und in Richtung der Y-Achse) über den einem Markierungsbereich der aufzubringenden Massverkörperung 15 entsprechenden ersten Bereich B1 der ersten Seitenoberfläche 2.1 der Führungsschiene 2 bewegt, sodass nacheinander verschiedene Teilbereiche des ersten Bereichs B1 bestrahlt werden.

Die Bestrahlung eines Teilbereichs mit einem der Lichtpulse bewirkt lokal ein geringfügiges Abtragen und/oder eine räumliche Umverteilung des die erste Seitenoberfläche 2.1 der Führungsschiene 2 bildenden Werkstoffs (Stahl), sodass die Form der Oberfläche im bestrahlten Teilbereich nach der Bestrahlung mit einem Lichtpuls verändert wird. Dadurch, dass der Laserstrahl über den ersten Bereich B1 derart bewegt wird, jeder der verschiedenen bestrahlten Teilbereiche eine Überlappung mit mindestens einem anderen der bestrahlten Teilbereiche aufweisen muss, wird erreicht, dass die erste Seitenoberfläche 2.1 der Führungsschiene 2 im ersten Bereich B1 nach der Bestrahlung mit den Lichtpulsen eine räumliche Modulation aufweist, sodass die erste Seitenoberfläche 2.1 im ersten Bereich B1 - im Vergleich zu ihrem Zustand vor der Bestrahlung mit den Lichtpulsen - eine erhöhte Rauigkeit aufweist. Die Bestrahlung des ersten Bereichs mit den Lichtpulsen ermöglicht eine Mikrostrukturierung der ersten Seitenoberfläche derart, dass eine vor der Bestrahlung glatte Oberfläche nach der Bestrahlung im gesamten ersten Bereich eine Anordnung von Erhebungen ("Mikrostruktur") aufweist, welche eine im Wesentlichen gleichmässige Aufrauung der Oberfläche im ersten Bereich B1 repräsentiert.

Im Beispiel gemäss Fig. 3A ist der Durchmesser DL des Laserstrahls bzw. der Durchmesser D der jeweils mit einem Lichtpuls bestrahlten Teilbereiche des ersten Bereichs B1 in Relation zu der Erstreckung DBX des ersten Bereichs B1 in der Längsrichtung der Massverkörperung 15 und in Relation zu der Erstreckung DBY des ersten Bereichs B1 quer zur Längsrichtung der Massverkörperung 15 derart gewählt, dass

$$D < DBX < 2\,D$$

und

$$D < DBY < n\,D,$$

wobei n eine natürliche Zahl ist (mit n≥2).

Weiterhin ist angenommen, dass die verschiedenen jeweils mit einem Lichtpuls bestrahlten Teilbereiche derart im ersten Bereichs B1 angeordnet sind, dass eine erste Gruppe von Teilbereichen der Gesamtheit aller bestrahlten Teilbereiche mit einer Anzahl vom insgesamt n Teilbereichen vorhanden ist, wobei die einzelnen Teilbereiche dieser ersten Gruppen in einer sich quer zur Längsrichtung der Massverkörperung 15 **(d.h.** in Richtung der Y-Achse) erstreckenden Reihe angeordnet sind und dabei relativ zueinander derart angeordnet sind, dass die Mittelpunkte der verschiedenen Teilbereiche relativ zueinander jeweils quer zur Längsrichtung der Massverkörperung 15 um vorgegebene Distanzen versetzt sind. Wie in Fig. 3A dargestellt, bildet die vorstehend genannte erste Gruppe von Teilbereichen gesamthaft einen in der Fig. 3A mit dem Bezugszeichen "L1" bezeichneten ersten linienförmigen Abschnitt des ersten Bereiches B1, dessen Erstreckung quer zur Längsrichtung der Massverkörperung 15 mit der Erstreckung DBY des ersten Bereichs B1 identisch ist und dessen Erstreckung in Längsrichtung der Massverkörperung 15 mit dem Durchmesser D der jeweils mit einem Lichtpuls bestrahlten Teilbereiche identisch ist.

Es sei darauf hingewiesen, dass in Fig. 3A nicht alle der im ersten linienförmigen Abschnitt L1 angeordneten Teilbereiche der vorstehend genannten ersten Gruppe von Teilbereichen dargestellt sind: Graphisch dargestellt sind (aus Gründen der besseren Übersichtlichkeit der Darstellung) lediglich vier der jeweiligen Teilbereiche der vorstehend genannten ersten Gruppe von Teilbereichen, wobei diese vier Teilbereiche in Fig. 3A mit den Bezugszeichen "TB11", "TB15", "TB16" und "TB1n" bezeichnet sind. Die beiden Teilbereiche "TB11" und "TB1n" sind hierbei in Richtung der Y-Achse derart relativ zueinander versetzt angeordnet, dass der Teilbereich "TB11" mit Bezug auf die Y-Achse an einem Ende des ersten linienförmigen Abschnitts L1 angeordnet ist und der Teilbereich "TB1n" an dem anderen Ende des ersten linienförmigen Abschnitts L1 (d.h. dem Teilbereich "TB11" gegenüberliegend) angeordnet ist. Die beiden Teilbereiche "TB15" und "TB16" sind relativ zueinander derart angeordnet, dass der Mittelpunkt des Teilbereichs "TB16" relativ zum Mittelpunkt des Teilbereichs "TB15" in Richtung der Y-Achse um eine Distanz ΔY versetzt ist. Im vorliegenden Beispiel ist die Distanz ΔY derart gewählt, dass die Distanz ΔY vorzugsweise grösser oder gleich der Hälfte des Durchmessers D der jeweils mit einem Lichtpuls bestrahlten Teilbereiche ist und die Distanz ΔY vorzugsweise kleiner als 80% des Durchmessers D der jeweils mit einem Lichtpuls bestrahlten Teilbereiche ist (d.h. D/2 ≤ ΔY < 0.8 * D). Die beiden Teilbereiche "TB15" und "TB16" weisen deshalb eine Überlappung auf, welche in Fig. 3A als eine schraffierte Fläche dargestellt ist, welche mit dem Bezugszeichen "UY" bezeichnet ist. Die Überlappung UY weist in Richtung der Y-Achse eine Erstreckung DUY auf, welche vorzugsweise im Bereich von 20-50% der räumlichen Erstreckung D des von einem einzelnen Lichtpuls bestrahlten Teilbereichs in Richtung der Y-Achse liegt.

Die Erstreckung DUY steht mit dem Durchmesser D der jeweils mit einem Lichtpuls bestrahlten Teilbereiche und mit dem vorstehend genannten Abstand ΔY gemäss der folgenden Gleichung in Zusammenhang: DUY = D - ΔY.

Hinsichtlich derjenigen Teilbereiche der vorstehend genannten ersten Gruppe von Teilbereichen, welche in der Fig. 3A nicht dargestellt sind, sei darauf hingewiesen, dass die Mittelpunkte der verschiedenen Teilbereiche relativ zueinander jeweils quer zur Längsrichtung der Massverkörperung 15 derart versetzt angeordnet sein können, das zu jedem einzelnen der verschiedenen mit einem Lichtpuls bestrahlten Teilbereiche ein anderer mit einem Lichtpuls bestrahlter Teilbereich vorhandenen ist, dessen Mittelpunkt quer zu der Längsrichtung der Massverkörperung 15 (d.h. in Richtung der Y-Achse) relativ zu dem Mittelpunkt des jeweiligen einzelnen der verschiedenen mit einem Lichtpuls bestrahlten Teilbereiche um eine Distanz versetzt ist, welche der in Fig. 3A dargestellten Distanz ΔY zwischen den Mittelpunkten der Teilbereiche "TB15" und "TB16" entspricht. Dementsprechend weist jeder der Teilbereiche der vorstehend genannten ersten Gruppe von Teilbereichen zumindest mit einem anderen Teilbereich der vorstehend genannten ersten Gruppe von Teilbereichen eine Überlappung auf, welche der in der Fig. 3A dargestellten Überlappung UY der Teilbereiche "TB15" und "TB16" entspricht.

Wie aus Fig. 3A ersichtlich, sind die verschiedenen jeweils mit einem Lichtpuls bestrahlten Teilbereiche derart im ersten Bereichs B1 angeordnet, dass zusätzlich zu der vorstehend beschriebenen ersten Gruppe von Teilbereichen eine zweite Gruppe von Teilbereichen der Gesamtheit aller bestrahlten Teilbereiche mit einer Anzahl vom insgesamt n Teilbereichen vorhanden ist, wobei die einzelnen Teilbereiche dieser zweiten Gruppe in einer sich quer zur Längsrichtung der Massverkörperung 15 (d.h. in Richtung der Y-Achse) erstreckenden Reihe angeordnet sind und dabei relativ zueinander derart angeordnet sind, dass die Mittelpunkte der verschiedenen Teilbereiche relativ zueinander jeweils quer zur Längsrichtung der Massverkörperung 15 ebenfalls um vorgegebene Distanzen versetzt sind. Wie in Fig. 3A dargestellt, bildet die vorstehend genannte zweite Gruppe von Teilbereichen gesamthaft einen in der Fig. 3A mit dem Bezugszeichen "L2" bezeichneten zweiten linienförmigen Abschnitt des ersten Bereiches B1, dessen Erstreckung quer zur Längsrichtung der Massverkörperung 15 mit der Erstreckung DBY des ersten Bereiches B1 identisch ist und dessen Erstreckung in Längsrichtung der Massverkörperung 15 mit dem Durchmesser D der jeweils mit einem Lichtpuls bestrahlten Teilbereiche identisch ist.

Wie in Fig. 3A angedeutet, sind die einzelnen mit Lichtimpulsen bestrahlten Teilbereiche der zweiten Gruppe von Teilbereichen in dem zweiten linienförmigen Abschnitt L2 des ersten Bereichs B1 quer zur Längsrichtung der Massverkörperung 15 auf eine Weise räumlich verteilt angeordnet, welche analog der räumlichen Verteilung der einzelnen mit Lichtimpulsen bestrahlten Teilbereiche der ersten Gruppe von Teilbereichen in dem ersten linienförmigen Abschnitt L1 in Richtung der Y-Achse entspricht.

In Fig. 3A sind ebenfalls nicht alle der im zweiten linienförmigen Abschnitt L2 angeordneten Teilbereiche der zweiten Gruppe von Teilbereichen dargestellt: Graphisch dargestellt sind (aus Gründen der besseren Übersichtlichkeit der Darstellung) lediglich vier der jeweiligen Teilbereiche der vorstehend genannten zweiten Gruppe von Teilbereichen, wobei diese vier Teilbereiche in Fig. 3A mit den Bezugszeichen "TB21", "TB25", "TB26" und "TB2n" bezeichnet sind. Die beiden Teilbereiche "TB21" und "TB2n" sind hierbei in Richtung der Y-Achse derart relativ zueinander versetzt angeordnet, dass der Teilbereich "TB21" mit Bezug auf die Y-Achse an einem Ende des zweiten linienförmigen Abschnitts L2 angeordnet ist und der Teilbereich "TB2n" an dem anderen Ende des zweiten linienförmigen Abschnitts L2 (d.h. dem Teilbereich "TB21" gegenüberliegend) angeordnet ist.

Ausserdem sind die Mittelpunkte der verschiedenen Teilbereiche der zweiten Gruppe von Teilbereichen in dem zweiten linienförmigen Abschnitt L2 des ersten Bereichs B1 relativ zueinander jeweils quer zur Längsrichtung der Massverkörperung 15 derart versetzt angeordnet, das zu jedem einzelnen der verschiedenen mit einem Lichtpuls bestrahlten Teilbereiche ein anderer mit einem Lichtpuls bestrahlter Teilbereich vorhandenen ist, dessen Mittelpunkt quer zu der Längsrichtung der Massverkörperung 15 (d.h. in Richtung der Y-Achse) relativ zu dem Mittelpunkt des jeweiligen einzelnen der verschiedenen mit einem Lichtpuls bestrahlten Teilbereiche um eine Distanz versetzt ist, welche der in Fig. 3A dargestellten Distanz $\Delta Y$ zwischen den Mittelpunkten der Teilbereiche "TB15" und "TB16" entspricht. Dementsprechend weist jeder der Teilbereiche der zweiten Gruppe von Teilbereichen zumindest mit einem anderen Teilbereich der zweiten Gruppe von Teilbereichen eine Überlappung auf, welche der in der Fig. 3A dargestellten Überlappung UY der Teilbereiche "TB15" und "TB16" entspricht.

Wie erwähnt, ist im Beispiel gemäss Fig. 3A der Durchmesser DL des Laserstrahls bzw. der Durchmesser D der jeweils mit einem Lichtpuls bestrahlten Teilbereiche des ersten Bereichs B1 in Relation zu der Erstreckung DBX des ersten Bereichs B1 in der Längsrichtung der Massverkörperung 15 derart gewählt, dass die Relation D < DBX < 2 D erfüllt ist. Da sowohl der erste linienförmige Abschnitt L1 des ersten Bereichs B1 als auch der zweite linienförmige Abschnitt L2 des ersten Bereichs B1 eine Erstreckung in Längsrichtung der Massverkörperung 15 aufweisen, welche mit dem Durchmesser D der jeweils mit einem Lichtpuls bestrahlten Teilbereiche identisch ist, sind die Teilbereiche der ersten Gruppe von Teilbereichen und die Teilbereiche der zweiten Gruppe von Teilbereichen relativ zueinander derart angeordnet, dass die Mittelpunkte der Teilbereiche der ersten Gruppe von Teilbereichen auf einer sich in Richtung der Y-Achse erstreckenden ersten Geraden liegen und die Mittelpunkte der Teilbereiche der zweiten Gruppe von Teilbereichen auf einer sich ebenfalls in Richtung der Y-Achse erstreckenden zweiten Geraden liegen, wobei die erste Gerade und die zweite Gerade parallel zueinander angeordnet sind und in der Längsrichtung der Massverkörperung 15 einen Abstand $\Delta X$ aufweisen, welcher kleiner als der Durchmesser D der jeweils mit einem Lichtpuls bestrahlten Teilbereiche ist.

Demensprechend weisen der erste linienförmige Abschnitt L1 des ersten Bereichs B1 und der zweite linienförmige Abschnitt L2 des zweiten Bereichs B1 eine Überlappung auf, welche sich in Richtung der Y-Achse über eine Länge erstreckt, welche der Erstreckung DBY des ersten Bereiches B1 in Richtung der Y-Achse entspricht, und welche sich in Längsrichtung der Massverkörperung 15 über eine (in Fig. 3A dargestellte) Länge DUX erstreckt. Die Erstreckung DUX der Überlappung des ersten linienförmigen Abschnitts L1 des ersten Bereichs B1 und des zweiten linienförmigen Abschnitts L2 des ersten Bereichs B1 in Längsrichtung der Massverkörperung 15 steht mit dem Durchmesser D der jeweils mit einem Lichtpuls bestrahlten Teilbereiche und mit dem vorstehend genannten Abstand $\Delta X$ gemäss der folgenden Gleichung in Zusammenhang: DUX = D - $\Delta X$.

Dementsprechend sind die Teilbereiche der ersten Gruppe von Teilbereichen und die Teilbereiche der zweiten Gruppe von Teilbereichen relativ zueinander derart angeordnet, dass in der Regel jeder Teilbereich der ersten Gruppe von Teilbereichen mit zumindest einem Teilbereich der zweiten Gruppe von Teilbereichen eine Überlappung aufweist, welche in der Längsrichtung der Massverkörperung 15 eine Erstreckung aufweist, die mit der vorstehend genannten Erstreckung DUX der Überlappung zwischen dem ersten linienförmigen Abschnitts L1 des ersten Bereichs B1 und dem zweiten linienförmigen Abschnitt L2 des zweiten Bereichs B1 in Längsrichtung der Massverkörperung 15 identisch ist.

In Fig. 3A ist dementsprechend beispielhaft dargestellt, dass der Teilbereich TB11 und der Teilbereich TB21 in Längsrichtung der Massverkörperung 15 derart versetzt angeordnet sind, dass der Teilbereich TB11 und der Teilbereich TB21 eine Überlappung aufweisen, welche in Fig. 3A als eine schraffierte Fläche dargestellt ist, welche mit dem Bezugszeichen "UX" bezeichnet ist. Diese Überlappung UX weist in Richtung der X-Achse eine Erstreckung auf, welche mit der vorstehend genannten Erstreckung DUX identisch ist.

In Fig. 3A ist beispielhaft zusätzlich dargestellt, dass der Teilbereich TB1n und der Teilbereich TB2n in Längsrichtung der Massverkörperung 15 derart versetzt angeordnet sind, dass der Teilbereich TB1n und der Teilbereich TB2n eine Überlappung aufweisen, welche in Fig. 3A als eine schraffierte Fläche dargestellt ist, welche ebenfalls mit dem Bezugszeichen "UX" bezeichnet ist. Diese Überlappung UX weist in Richtung der X-Achse dementsprechend eine Erstreckung auf, welche mit der vorstehend genannten Erstreckung DUX identisch ist.

In Fig. 3A ist beispielhaft zusätzlich dargestellt, dass der Teilbereich TB15 und der Teilbereich TB25 in Längsrichtung der Massverkörperung 15 derart versetzt angeordnet sind, dass der Teilbereich TB15 und der Teilbereich TB25 eine Überlappung aufweisen, welche in Fig. 3A als eine schraffierte Fläche dargestellt ist, welche ebenfalls mit dem Bezugszeichen "UX" bezeichnet ist, und welche in Richtung der X-Achse dementsprechend eine Erstreckung aufweist, welche mit der vorstehend genannten Erstreckung DUX identisch ist.

Wie in Fig. 3A ausserdem dargestellt, sind der Teilbereich TB16 und der Teilbereich TB26 in Längsrichtung der Massverkörperung 15 derart versetzt angeordnet, dass der Teilbereich TB16 und der Teilbereich TB26 eine Überlappung aufweisen, welche in Fig. 3A als eine schraffierte Fläche dargestellt ist, welche ebenfalls mit dem Bezugszeichen "UX" bezeichnet ist, und welche in Richtung der X-Achse dementsprechend eine Erstreckung aufweist, welche mit der vorstehend genannten Erstreckung DUX identisch ist.

Wie aus Fig. 3A ersichtlich, sind die beiden Teilbereiche TB25 und TB26 relativ zueinander derart angeordnet, dass der Mittelpunkt des Teilbereichs TB26 relativ zum Mittelpunkt des Teilbereichs TB25 in Richtung der Y-Achse um die Distanz $\Delta Y$ versetzt ist, sodass die beiden Teilbereiche TB25 und TB26 in Richtung der Y-Achse eine Überlappung aufweisen, welche in Fig. 3A als eine schraffierte Fläche dargestellt ist, welche mit dem Bezugszeichen "UY" bezeichnet ist.

Wie aus Fig. 3A ersichtlich, weisen die mit jeweils einem einzelnen Lichtpuls bestrahlten Teilbereiche TB15, TB16, TB25 und TB26 des ersten Bereichs B1 demnach Überlappungen UX und UY in zwei Dimensionen auf (d.h. sowohl in der Längsrichtung der mindestens einen Spur als auch quer zur Längsrichtung der mindestens einen Spur).

Dementsprechend weisen alle mit einem einzelnen Lichtpuls bestrahlten Teilbereiche des ersten Bereichs B1 jeweils Überlappungen UX und UY in zwei Dimensionen auf( d.h. sowohl in der Längsrichtung der mindestens einen Spur als auch quer zur Längsrichtung der mindestens einen Spur).

Der Abstand $\Delta X$ wird vorzugsweise derart gewählt, dass die Erstreckung DUX der Überlappung UX in Richtung der X-Achse vorzugsweise im Bereich von 20-50% der räumlichen Erstreckung D des von einem einzelnen Lichtpuls bestrahlten Teilbereichs in Richtung der X-Achse liegt.

Fig. 3B zeigt - ähnlich wie Fig. 3A (in einer Draufsicht auf die Seitenoberfläche 2.1) einen ersten Bereich B2 der Seitenoberfläche 2.1, in welchem die Seitenoberfläche 2.1 mithilfe eines gepulsten Lasers bearbeitet werden soll, um im ersten Bereich B2 eine Mikrostruktur auszubilden, welche einen der Markierungsbereiche der ersten Spur SP1 oder der zweiten Spur SP2 der Massverkörperung 15 repräsentiert.

Ähnlich wie im Beispiel gemäss Fig. 3A wird im Beispiel gemäss Fig. 3B angenommen, dass der erste Bereich B2 im Wesentlichen die Form eines Rechtecks hat, welches in der Längsrichtung der Massverkörperung 15 eine Erstreckung DBX und quer zur Längsrichtung der Massverkörperung 15 (d.h. in Richtung der Y-Achse gemäss Fig. 1 und 2) eine Erstreckung DBY aufweist.

Ähnlich wie im Beispiel gemäss Fig. 3A wird im Beispiel gemäss Fig. 3B zur Herstellung eines im Bereich B2 auszubildenden Mikrostruktur ein gepulster Laser zum Erzeugen eines Laserstrahls bereitgestellt, wobei der Laser den Laserstrahl mit einer Folge von mehreren Lichtpulsen erzeugt und der Laserstrahl derart auf den ersten Bereich B2 der ersten Seitenoberfläche 2.1 gerichtet wird, dass mittels jedes einzelnen Lichtpulses der erzeugten Folge von mehreren Lichtpulsen lediglich ein Teilbereich des ersten Bereichs B2 bestrahlt wird.

Ähnlich wie im Beispiel gemäss Fig. 3A wird im Beispiel gemäss Fig. 3B angenommen, dass der Laserstrahl in einer Ebene senkrecht zur Ausbreitungsrichtung des Laserstrahl ein im Wesentlichen kreisrundes Strahlprofil mit einem Durchmesser DL aufweist, sodass ein einzelner Lichtimpuls des Laserstrahls beim Auftreffen auf die Seitenoberfläche 2.1 einen Bereich der Seitenoberfläche 2.1 mit Laserlicht bestrahlt, welcher die Form eines Kreises hat, wobei der Durchmesser dieses von einem einzelnen Lichtpuls bestrahlten Bereichs im vorliegenden Beispiel im Wesentlichen dem Durchmesser DL des Lasers entspricht.

Ähnlich wie im Beispiel gemäss Fig. 3A wird im Beispiel gemäss Fig. 3B angenommen, dass die Seitenoberfläche 2.1 beim Auftreffen eines einzelnen Lichtimpulses des Laserstrahls auf die Seitenoberfläche 2.1 derart bestrahlt wird, dass die Seitenoberfläche 2.1 in einem kreisförmigen Bereich, welcher die Form eines einen Durchmesser D aufweisendes Kreises aufweist, aufgrund der Bestrahlung mit dem einzelnen Lichtimpuls, derart verändert wird, dass die Seitenoberfläche 2.1 in dem vorstehend genannte kreisförmigen Bereich mit dem Durchmesser D eine Veränderung in Form einer räumlichen Modulation aufweist (im Vergleich zur Form der Oberfläche vor der Bestrahlung mit dem jeweiligen einzelnen Lichtpuls). Dementsprechend wird im Beispiel gemäss Fig. 3B ein "von dem jeweiligen einzelnen Lichtpuls bestrahlter Teilbereich des ersten Bereichs B2" jeweils als ein Bereich der Seitenoberfläche 2.1 dargestellt, welcher durch einen Kreis mit dem Durchmesser D begrenzt ist.

Ähnlich wie im Beispiel gemäss Fig. 3A wird im Beispiel gemäss Fig. 3B zusätzlich angenommen, dass der Laserstrahl derart auf den ersten Bereich B2 der ersten Seitenoberfläche 2.1 gerichtet wird, dass die räumliche Erstreckung D des von dem jeweiligen einzelnen Lichtpuls bestrahlten Teilbereichs des ersten Bereichs B2 in der Längsrichtung der Massverkörperung 15 (d.h. in Richtung der X-Achse) kleiner als die räumliche Erstreckung DBX des ersten Bereichs B2 in der Längsrichtung der Massverkörperung 15 ist und dass die räumliche Erstreckung D des von dem jeweiligen einzelnen Lichtpuls bestrahlten Teilbereichs quer zur Längsrichtung der Massverkörperung 15 (d.h. in Richtung der Y-Achse) kleiner als die räumliche Erstreckung DBY des ersten Bereichs B2 quer zur Längsrichtung der Massverkörperung 15 ist.

Das Beispiel gemäss Fig. 3B unterscheidet sich von dem Beispiel gemäss Fig. 3A im Wesentlichen dadurch, dass zwar die Erstreckung DBY des ersten Bereich B2 gemäss Fig. 3B quer zur Längsrichtung der Massverkörperung 15 (d.h. in Richtung der Y-Achse) identisch mit der Erstreckung des ersten Bereich B1 gemäss Fig. 3A quer zur Längsrichtung der Massverkörperung 15 ist, dass allerdings die räumliche Erstreckung DBX des ersten Bereichs B2 in der Längsrichtung der Massverkörperung 15 wesentlich grösser als die Erstreckung des ersten Bereich B1 gemäss Fig. 3A in Längsrichtung der Massverkörperung 15 sein soll. Letzteres trägt der Anforderung Rechnung, dass die Massverkörperung 15 verschiedene Markierungsbereiche im Bereich der zweiten Spur SP2 aufweist, deren Erstreckungen in Längsrichtung der Massverkörperung 15 in einem erheblichen Mass unterschiedlich sind.

Im Beispiel gemäss Fig. 3A ist dementsprechend angenommen, dass die räumliche Erstreckung DBX des ersten Bereichs B2 in der Längsrichtung der Massverkörperung 15 wesentlich grösser sein soll als das Doppelte der räumlichen Erstreckung D des von dem jeweiligen einzelnen Lichtpuls bestrahlten Teilbereichs des ersten Bereichs B2 in der Längsrichtung der Massverkörperung 15 (d.h. DBX > 2 * D).

Im Beispiel gemäss Fig. 3B wird der Laserstrahl ebenfalls relativ zur Führungsschiene 2 derart bewegt, dass zumindest mehrere der Lichtpulse der erzeugten Folge von mehreren Lichtpulsen zeitlich nacheinander mehrere verschiedene Teilbereiche des ersten Bereichs B2 bestrahlen, welche relativ zueinander räumlich verteilt angeordnet sind, wobei zu jedem einzelnen der mehreren verschiedenen bestrahlten Teilbereiche mindestens ein anderer der mehreren verschiedenen bestrahlten Teilbereiche vorhanden ist, welcher zu dem jeweiligen einzelnen der mehreren verschiedenen bestrahlten Teilbereiche in der Längsrichtung der Massverkörperung 15 **(d.h. in Richtung der X-Achse)** und/oder quer zu der Längsrichtung der Massverkörperung 15 (d.h. in Richtung der Y-Achse) derart versetzt ist, dass der jeweilige einzelne der mehreren verschiedenen bestrahlten Teilbereiche und der mindestens eine andere der mehreren verschiedenen bestrahlten Teilbereiche eine Überlappung aufweisen, und wobei die mehreren verschiedenen bestrahlten Teilbereiche zusammen einen Bereich der ersten Seitenoberfläche bilden, welcher mit dem ersten Bereich B2 deckungsgleich ist.

Im Beispiel gemäss Fig. 3B wird demnach der Laserstrahl ebenfalls zweidimensional (d.h. in Richtung der X-Achse und in Richtung der Y-Achse) über den einem Markierungsbereich der aufzubringenden Massverkörperung 15 entsprechendem ersten Bereich B2 der ersten Seitenoberfläche 2.1 der Führungsschiene 2 bewegt, sodass nacheinander verschiedene Teilbereiche des ersten Bereichs B2 bestrahlt werden.

Im Unterschied zum Beispiel gemäss Fig. 3A ist im Beispiel gemäss Fig. 3B angenommen, dass wegen der relativ grossen räumlichen Erstreckung DBX des ersten Bereichs B2 in der Längsrichtung der Massverkörperung 15 im Vergleich zur räumlichen Erstreckung D des von dem jeweiligen einzelnen Lichtpuls bestrahlten Teilbereichs die verschiedenen jeweils mit einem Lichtpuls bestrahlten Teilbereiche derart im ersten Bereichs B2 angeordnet sind, dass mehr als zwei verschiedene Gruppen von Teilbereichen der Gesamtheit aller bestrahlten Teilbereiche vorhanden sind, wobei jede dieser mehr als zwei verschiedenen Gruppen von Teilbereichen jeweils mehrere der Teilbereiche (mit einer Anzahl n von Teilbereichen wie im Beispiel gemäss Fig. 3A) umfasst und die einzelnen Teilbereiche jeder der mehr als zwei verschiedenen Gruppen in einer sich quer zur Längsrichtung der Massverkörperung 15 (d.h. in Richtung der Y-Achse) erstreckenden Reihe angeordnet sind und dabei relativ zueinander derart angeordnet sind, dass die Mittelpunkte der verschiedenen Teilbereiche relativ zueinander jeweils quer zur Längsrichtung der Massverkörperung 15 um vorgegebene Distanzen versetzt sind. Hierbei unterscheiden sich die mehr als zwei verschiedenen Gruppen von Teilbereichen dadurch, dass die Mittelpunkte der Teilbereiche einer der verschiedenen Gruppen von Teilbereichen relativ zu den Mittelpunkten der Teilbereiche jeder anderen der verschiedenen Gruppen von Teilbereichen in Längsrichtung der Massverkörperung 15 (d.h. in Richtung der X-Achse) um vorgegebene Distanzen versetzt sind.

Im Beispiel gemäss Fig. 3B ist angenommen, dass sieben verschiedene Gruppen von Teilbereichen vorhanden sind (alternativ könnten mehr oder weniger verschiedene Gruppen vorhanden sein). Wie in Fig. 3B dargestellt, bilden die jeweiligen Teilbereiche jeder der sieben verschiedenen Gruppen von Teilbereichen jeweils einen linienförmigen Abschnitt des ersten Bereiches B2, dessen Erstreckung quer zur Längsrichtung der Massverkörperung 15 mit der Erstreckung DBY des ersten Bereichs B2 identisch ist und dessen Erstreckung in Längsrichtung der Massverkörperung 15 mit dem Durchmesser D der jeweils mit einem Lichtpuls bestrahlten Teilbereiche identisch ist.

Da die Mittelpunkte der Teilbereiche einer der sieben verschiedenen Gruppen von Teilbereichen relativ zu den Mittelpunkten der Teilbereiche jeder anderen der sieben verschiedenen Gruppen von Teilbereichen in Längsrichtung der Massverkörperung 15 (d.h. in Richtung der X-Achse) um vorgegebene Distanzen versetzt sind, bilden die Teilbereiche der sieben verschiedenen Gruppen insgesamt sieben linienförmige Abschnitte des ersten Bereiches B2, welche in Fig. 3B mit den Bezugszeichen "L1", "L2", "L3", "L4", "L5", "L6" bzw. "L7" bezeichnet sind.

In Fig. 3B sind die einzelnen mit einem Lichtpuls bestrahlten Teilbereiche, welche jeweils einem der sieben linienförmigen Abschnitte L1, L2, L3, L4, L5, L6 bzw. L7 des ersten Bereiches B2 zugeordnet sind, nicht dargestellt. Es wird in diesem Zusammenhang angenommen, dass die Anordnung der einzelnen mit einem Lichtpuls bestrahlten Teilbereiche der sieben linienförmigen Abschnitte L1, L2, L3, L4, L5, L6 bzw. L7 analog zu der Anordnung der einzelnen mit einem Lichtpuls bestrahlten Teilbereiche im ersten linienförmigen Abschnitt L1 bzw. im zweiten linienförmigen Abschnitt L2 des ersten Bereiches B1 gemäss Fig. 3A ist.

Wie in Fig. 3B angedeutet, liegen die Mittelpunkte der einzelnen mit einem Lichtpuls bestrahlten Teilbereiche in jedem der sieben linienförmigen Abschnitte L1, L2, L3, L4, L5, L6 bzw. L7 des ersten Bereichs B2 jeweils auf einer Geraden, welche sich in Richtung der Y-Achse erstreckt. Im Beispiel gemäss Fig. 3B sind sieben linienförmigen Abschnitte L1, L2, L3, L4, L5, L6 bzw. L7 des ersten Bereichs B2 derart relativ zueinander angeordnet, dass die Mittelpunkte derjenigen mit einem Lichtpuls bestrahlten Teilbereiche, welche dem linienförmigen Abschnitt L1 zugeordnet sind, relativ zu den Mittelpunkten derjenigen mit einem Lichtpuls bestrahlten Teilbereiche, welche dem linienförmigen Abschnitt L2 zugeordnet sind, mit Bezug auf die Längsrichtung der Massverkörperung 15 (d.h. in Richtung der X-Achse) einen Abstand $\Delta X$ aufweisen, welcher kleiner als der Durchmesser D der jeweils mit einem Lichtpuls bestrahlten Teilbereiche ist. Entsprechend weisen die Mittelpunkte derjenigen mit einem Lichtpuls bestrahlten Teilbereiche, welche dem linienförmigen Abschnitt L2 zugeordnet sind, relativ zu den Mittelpunkten derjenigen mit einem Lichtpuls bestrahlten Teilbereiche, welche dem linienförmigen Abschnitt L3 zugeordnet sind, mit Bezug auf die Längsrichtung der Massverkörperung 15 (d.h. in Richtung der X-Achse) ebenfalls den vorstehend genannten Abstand $\Delta X$ auf. Die übrigen linienförmigen Abschnitte L4, L5, L6 bzw. L7 des ersten Bereichs B2 sind relativ zu den linienförmigen Abschnitten L1, L2 und L3 des ersten Bereichs B2 auf eine analoge Weise angeordnet: Die Mittelpunkte der einzelnen mit einem Lichtpuls bestrahlten Teilbereiche der sieben linienförmigen Abschnitte L1, L2, L3, L4, L5, L6 bzw. L7 liegen jeweils auf verschiedenen sich in Richtung der Y-Achse erstreckenden Geraden, welche in Längsrichtung der Massverkörperung 15 jeweils nacheinander äquidistant angeordnet sind, wobei der Abstand zwischen jeweils zwei benachbarten dieser Geraden dem vorstehend genannten Abstand $\Delta X$ entspricht (wie in Fig. 3B dargestellt).

Da vorausgesetzt ist, dass der Abstand $\Delta X$ kleiner als der Durchmesser D der jeweils mit einem Lichtpuls bestrahlten Teilbereiche ist, sind die linienförmigen Abschnitte L1, L2, L3, L4, L5, L6 bzw. L7 des ersten Bereichs B2 in Längsrichtung der Massverkörperung 15 derart versetzt angeordnet, dass jeder der linienförmigen Abschnitte L1, L2, L3, L4, L5, L6 bzw. L7 jeweils mit einem anderen der linienförmigen Abschnitte L1, L2, L3, L4, L5, L6 bzw. L7 eine Überlappung aufweist, welche in Fig. 3B als eine schraffierte Fläche dargestellt ist und jeweils dem Bezugszeichen "UX" bezeichnet ist. Die jeweilige Überlappung UX zwischen je zwei der linienförmigen Abschnitte L1, L2, L3, L4, L5, L6 bzw. L7 weist in Richtung der X-Achse dementsprechend eine Erstreckung DUX auf, welche mit dem vorstehend genannten Abstand $\Delta X$ gemäss der folgenden Gleichung in Zusammenhang steht: DUX = D - $\Delta X$.

Dementsprechend weist jeder mit einem Lichtpuls bestrahlte Teilbereich, welcher einem der linienförmigen Abschnitte L1, L2, L3, L4, L5, L6 bzw. L7 zugeordnet ist, mit zumindest einem anderen mit einem Lichtpuls bestrahlten Teilbereich, welcher einem anderen der linienförmigen Abschnitte L1, L2, L3, L4, L5, L6 bzw. L7 zugeordnet ist, eine Überlappung im Bereich einer der in Fig. 3B dargestellten Überlappungen UX auf.

Im Beispiel gemäss Fig. 3B wird der Abstand $\Delta X$ vorzugsweise derart gewählt, dass die Erstreckung DUX der Überlappung UX in Richtung der X-Achse vorzugsweise im Bereich von 20-50% der räumlichen Erstreckung D des von einem einzelnen Lichtpuls bestrahlten Teilbereichs in Richtung der X-Achse liegt.

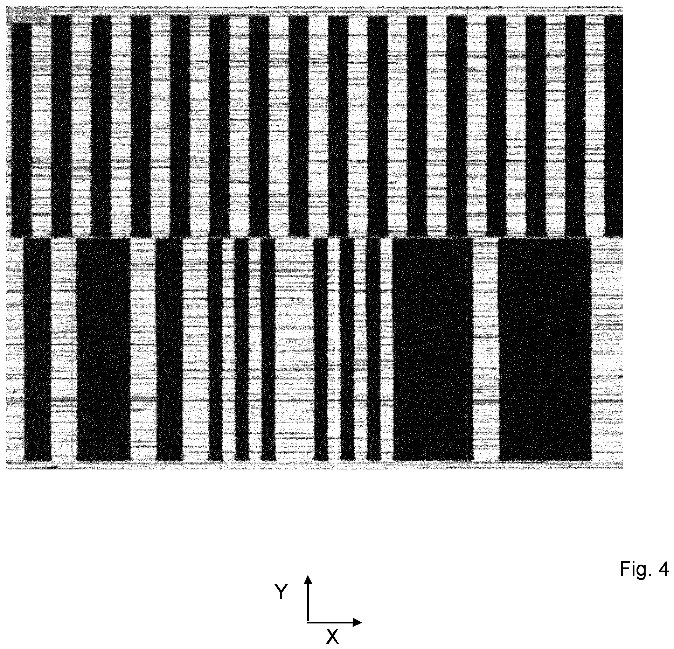

Im Folgenden werden Realisierungen einer in Fig. 1 und 2 dargestellten Massverkörperung 15 auf einer Seitenoberfläche einer Führungsschiene (aus Stahl) mit Bezug auf Fig. 4-7 erläutert.

Die Fig. 4-7 zeigen Realisierungen einer in Fig. 1 und 2 dargestellten Massverkörperung 15 auf einer Seitenoberfläche einer Führungsschiene einer Profilschienenführung, bei welchen zum Einbringen der Mikrostruktur in den jeweiligen Markierungsbereichen der Massverkörperung 15 auf der Seitenoberfläche der Führungsschiene beispielsweise ein Kurzpulslaser mit einer Wellenlänge von 355 nm und einer maximalen Ausgangsleistung von 300 mW sowie einer Pulsdauer kleiner 15 Nanosekunden und einer Blendenöffnung von 16 mm zum Einsatz kam. Zum Einbringen der Mikrostruktur konnte der Laserstrahl mit einer Scan-Geschwindigkeit 200 mm pro Sekunde relativ zur Führungsschiene bewegt werden, wobei der Laser eine Folge von Lichtpulsen mit einer Repetitionsrate (Pulsfrequenz) von 60 kHz erzeugte und für die Laserleistung in der Regel 90 % der maximalen Ausgangsleistung gewählt wurde.

Der Laserstrahl hatte ein kreisrundes Profil und wurde auf die Seitenoberfläche der Führungsschiene derart appliziert, dass ein einzelner Lichtpuls des Laserstrahls auf der Seitenoberfläche der Führungsschiene einen Teilbereich mit einem Durchmesser D von ca. 8 $\mu$m bestrahlte.

FIG. 4 zeigt eine Draufsicht durch ein Mikroskop auf eine mittels des erfindungsgemäßen Verfahrens mithilfe des vorstehend genannten Kurzpulslasers auf eine Seitenoberfläche einer Führungsschiene aufgebrachte Massverkörperung 15 gemäss Fig. 2. Die obere Hälfte der Fig. 4 zeigt eine Draufsicht auf die erste Spur SP1 (Inkrementalspur) der Massverkörperung 15 und die untere Hälfte der Fig. 4 zeigt eine Draufsicht auf die zweite Spur SP2 (Referenzspur) der Massverkörperung 15.

Die hellen Bereiche in Fig. 4 entsprechen den jeweiligen Spiegelbereichen der Massverkörperung 15, während die dunklen Bereiche in Fig. 4 die jeweiligen Markierungsbereiche der Massverkörperung 15 zeigen, welche mittels des vorstehend genannten Kurzpulslasers auf die Seitenoberfläche der Führungsschiene aufgebracht wurden.

Die in Fig. 4 dargestellte Seitenoberfläche wurde vor dem Aufbringen der Massverkörperung 15 poliert, sodass der Mittenrauwert (Ra) der Seitoberfläche Ra = 0.007 μm betrug (gemessen mit einem Laserscanning-Mikroskop). Die einzelnen Markierungsbereiche der in der oberen Hälfte der in Fig. 4 dargestellten ersten Spur SP1 (Inkrementalspur) haben in Längsrichtung der Massverkörperung 15 (d.h. in Richtung der X-Achse eines in Fig. 4 angegebenen Koordinatensystems) eine Erstreckung von ca. 100 μm.

Die in Fig. 4 dargestellten Markierungsbereiche der Massverkörperung 15 wurden entsprechend dem in Fig. 3B dargestellten Beispiel bereitgestellt, wobei die Parameter D und ΔX wie folgt gewählt wurden: D = 8 μm und ΔX = 5 μm.

Im Falle der in Fig. 4 dargestellten Seitenoberfläche hatte die Bestrahlung mit den Laserpulsen den Effekt, dass die Seitenoberfläche in den jeweiligen Markierungsbereichen eine über die gesamte Fläche des jeweiligen Markierungsbereichs homogene Aufrauung erfahren hatte, wobei der Mittenrauwert (Ra) in den Markierungsbereichen Ra = 0.162 μm betrug (gemessen mit einem Laserscanning-Mikroskop).

Infolge dieser Aufrauung zeigen die jeweiligen Markierungsbereiche der in Fig. 4 dargestellten Massverkörperung keine direkte Reflexion des auf die Markierungsbereiche (beispielsweise senkrecht zur Seitenoberfläche) einfallenden Lichts und sind deshalb in Fig. 4 in einem im Wesentlichen senkrecht zur Seitenoberfläche einfallenden Licht als homogene dunkle (schwarze) Flächenbereiche erkennbar.

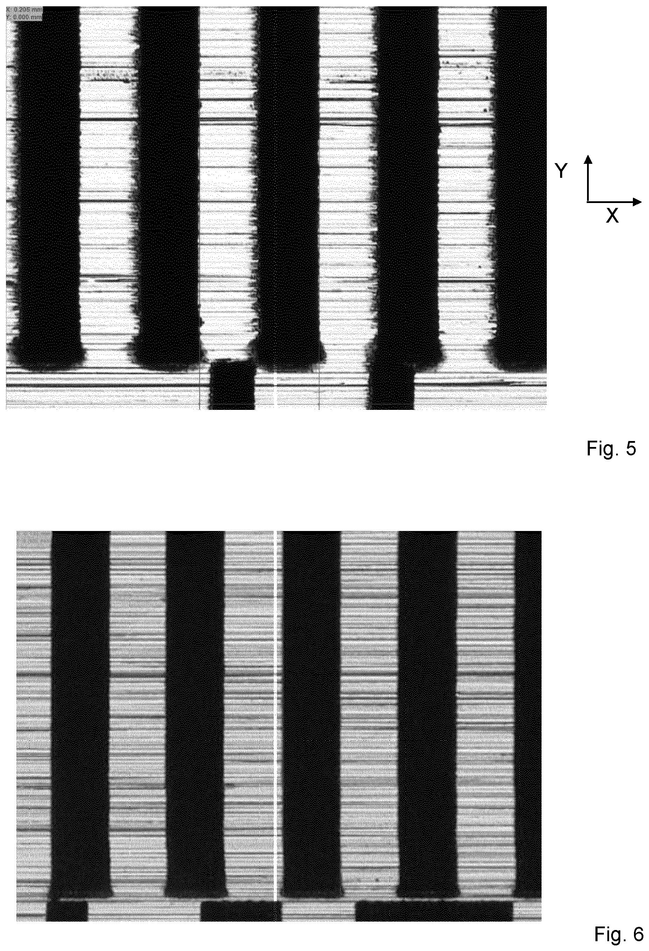

Fig. 5 zeigt eine Draufsicht durch ein Mikroskop auf eine mittels des erfindungsgemäßen Verfahrens mithilfe des vorstehend genannten Kurzpulslasers auf eine Seitenoberfläche einer Führungsschiene aufgebrachte Massverkörperung 15 wie in Fig. 4, jedoch mit einer grösseren Vergrösserung, sodass die äusseren Konturen der jeweiligen Markierungsbereiche und der jeweiligen Spiegelbereiche der Massverkörperung 15 deutlicher erkennbar sind. In Fig. 5 sind in einem oberen Bereich der Fig. 5 insgesamt fünf der Markierungsbereiche der ersten Spur SP1 (Inkrementalspur) der Massverkörperung 15 und am unteren Rand der Fig. 5 insgesamt zwei der Markierungsbereiche der zweiten Spur SP2 (Referenzspur) der Massverkörperung 15 erkennbar. Bei detaillierter Betrachtung der mit dem Kurzpulslaser aufgebrachten Markierungsbereiche ist erkennbar, dass aufgrund der Einwirkung der vom Kurzpulslaser erzeugten Lichtpulse Materialrückstände (in Form von kleinen, an der Oberfläche haftenden Partikeln) entstehen, welche an den äusseren Rändern der Markierungsbereichen in die jeweils angrenzenden (polierten) Spiegelbereiche ragen können. Dies führt dazu, dass die jeweiligen Markierungsbereiche an ihren Rändern in der Ansicht gemäss Fig. 5 nicht sauber gradlinig begrenzt zu sein scheinen. Letzteres kann u.a. Ränder der Markierungsbereiche betreffen, welche sich in der Darstellung gemäss FIG. 5 jeweils quer zu Längsrichtung der Massverkörperung 15 (d.h. in Richtung der Y-Achse eines in Fig. 5 angegebenen Koordinatensystems) erstrecken, und somit Einfluss haben auf die Messgenauigkeit eines Linear-Encoders, welcher auf einer optischen Abtastung der Massverkörperung 15 in Längsrichtung der Massverkörperung 15 beruht.

Materialrückstände der vorstehend genannten Art, welche beim Aufbringen der Markierungsbereiche mit einem Kurzpulslaser der vorstehend genannten Art entstehen können, können durch einen Oberflächenreinigungsprozess mit einem geeigneten Reinigungsmittel restlos entfernt werden.

Weiterhin sei darauf hingewiesen, dass eine Bestrahlung einer Oberfläche einer aus dem Werkstoff Stahl bzw. Edelstahl bestehenden Führungsschiene mit den Lichtpulsen des Kurzpulslasers den Effekt haben kann, dass an der Oberfläche in dem jeweils bestrahlten Bereich eine Chrom-Verarmung (d.h. eine Reduktion der Konzentration der im Stahl enthaltenen Anteile von Chrom) induziert werden kann. Eine derartige Chromverarmung kann die Korrosionsbeständigkeit der Oberfläche der Führungsschiene (insbesondere in den Markierungsbereichen der Massverkörperung) reduzieren und wäre deshalb nachteilig im Hinblick auf eine wünschenswerte, möglichst langfristige Beständigkeit der Massverkörperung. Um dem vorstehend genannten Effekt entgegenzuwirken, kann vorzugsweise nach dem Aufbringen der Massverkörperung auf die Seitenoberfläche der Führungsschiene eine Passivierung der Seitenoberfläche mit einem geeigneten Passivierungsmittel vorgenommen werden.

Als ein Reinigungsmittel zum Reinigen von Edelstahloberflächen ist für den vorstehend genannten Zweck beispielsweise ein unter dem Namen "deconex MT 19" bekannter hochalkalischer Reiniger geeignet, welcher von der Firma Borer Chemie AG, Gewerbestrasse 13, 4528 Zuchwil hergestellt und vertrieben wird.

Als ein Passivierungsmittel zum Passivieren von Edelstahloberflächen ist für den vorstehend genannten Zweck beispielsweise ein unter dem Namen "deconex MT 41" bekannter stark saurer Reiniger geeignet, welcher ebenfalls von der vorstehend genannten Firma Borer Chemie AG hergestellt und vertrieben wird.

Als geeignet zum Reinigen und Passivieren der Seitenoberfläche der Führungsschiene nach dem Aufbringen der Massverkörperung 15 auf die Seitenoberfläche mithilfe eines Kurzpulslasers der vorstehend genannten Art hat sich insbesondere folgender sequenzieller Reinigungsprozess herausgestellt:

1. Reinigung mit "deconex MT 19", 2% Konzentration bei 55°C und 25 kHz; 15 W/L;

2. Passivierung mit "deconex MT 41", 8% Konzentration bei 55°C und 40 kHz; 15 W/L;

3. Abspülen mit DI-Wasser bei Raumtemperatur und 40 kHz; 15 W/L; und

4. Trocknen bei 100°C

FIG. 6 zeigt eine Ansicht der Massverkörperung gemäss Fig. 5 nach Durchführung des oben aufgeführten Ultraschallreinigungsprozesses. Im Vergleich zur FIG. 5 ist deutlich zu erkennen, dass die Markierungsbereiche nach Durchführung des vorstehend genannten Reinigungsprozesses im Wesentlichen gradlinig begrenzt sind. An den äusseren Rändern der Markierungsbereiche sind keine in die jeweils angrenzenden Spiegelbereiche ragenden Materialrückstände mehr erkennbar.

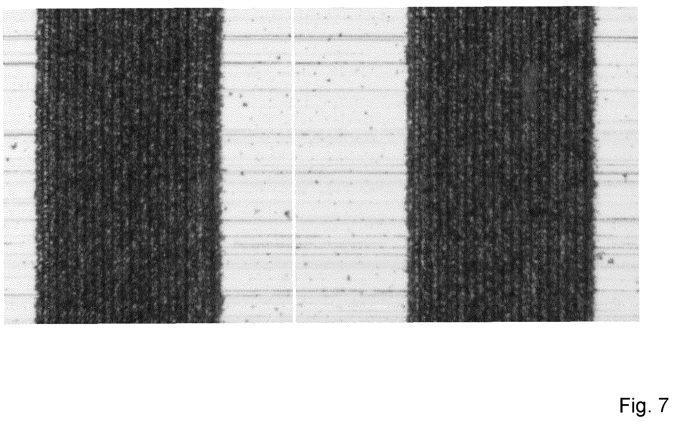

Fig. 7 zeigt einen Abschnitt der in der Fig. 6 dargestellten Markierungsbereiche in einer Vergrösserung, welche strukturelle Details der Oberfläche der einzelnen Markierungsbereiche nach Durchführung des oben aufgeführten Ultraschallreinigungsprozesses erkennen lässt. Sichtbar ist insbesondere eine Aufrauung der Oberfläche, welche über die gesamte Fläche eines Markierungsbereiches homogen ist.

Wie bereits erwähnt, beeinflusst die Rauigkeit, welche eine Seitenoberfläche 2.1 einer Führungsschiene 2 vor dem Aufbringen einer Massverkörperung 15 auf die Seitenoberfläche 2.1 gemäss dem beschriebenen Verfahren aufweist, massgeblich die Intensität des reflektierten Lichts RL1 bzw. RL2, welches in einem Linear-Encoder 11 gemäss Fig. 1 an den jeweiligen Spiegelbereichen der ersten Spur SP1 bzw. an den jeweiligen Spiegelbereichen der zweiten Spur SP2 der gemäss dem beschriebenen Verfahren auf die Seitenoberfläche 2.1 aufgebrachten Massverkörperung 15 reflektiert und mit den jeweiligen Fotosensoren der ersten Anordnung 25.1 von Fotosensoren bzw. den jeweiligen Fotosensoren der zweiten Anordnung 25.2 von Fotosensoren erfasst wird. Dementsprechend beeinflusst die Rauigkeit, welche die Seitenoberfläche 2.1 der Führungsschiene 2 vor dem Aufbringen einer Massverkörperung 15 auf die Seitenoberfläche 2.1 gemäss dem beschriebenen Verfahren aufweist, auch massgeblich die Grösse der jeweiligen Ausgangssignale, welche die jeweiligen Fotosensoren der ersten Anordnung 25.1 von Fotosensoren beim Erfassen des an der ersten Spur SP1 der Massverkörperung 15 reflektierten Lichts RL1 bzw. die jeweiligen Fotosensoren beim Erfassen des an der zweiten Spur SP2 der Massverkörperung 15 reflektierten Lichts RL2 jeweils erzeugen. Entsprechend beeinflusst die Rauigkeit, welche die Seitenoberfläche 2.1 der Führungsschiene 2 vor dem Aufbringen einer Massverkörperung 15 auf die Seitenoberfläche 2.1 gemäss dem beschriebenen Verfahren aufweist, auch massgeblich die Amplitude der Variation, welche die Ausgangssignale der jeweiligen Fotosensoren der ersten Anordnung 25.1 bzw. die Ausgangssignale der jeweiligen Fotosensoren der zweiten Anordnung 25.2 bei einer Bewegung des Messkopfes 21 in Längsrichtung der Führungsschiene 2 in Abhängigkeit von der jeweiligen Position des Messkopfes 21 mit Bezug auf die Längsrichtung der Führungsschiene 2 zeigen.

Um den vorstehend genannten Einfluss der Rauigkeit, welche eine Seitenoberfläche 2.1 einer Führungsschiene 2 vor dem Aufbringen einer Massverkörperung 15 auf die Seitenoberfläche 2.1 gemäss dem beschriebenen Verfahren aufweist, experimentell zu evaluieren, wurde auf Seitenoberflächen 2.1 mehrerer verschiedener Führungsschienen 2 jeweils eine in Fig. 2 dargestellte Massverkörperung 15 gemäss dem beschriebenen Verfahren aufgebracht, wobei eine Seitenoberfläche 2.1 einer der Führungsschienen vor dem Aufbringen der Massverkörperung 15 standardmässig geschliffen, aber (nach dem standardmässigen Schleifen) nicht poliert wurde und eine Seitenoberfläche 2.1 anderer Führungsschienen 2 zunächst standardmässig geschliffen und anschliessend (nach dem standardmässigen Schleifen) zusätzlich poliert wurde, insbesondere mittels einer Vorpolitur mit einer Keramik-Schleifscheibe mit sehr feiner Korngröße (400 oder feiner) und anschließendem Polieren mit einer auf Gummi- oder Kunstharzbasis gebundenen Polierscheibe oder alternativ durch Polieren mittels Polierbürsten.

Hierbei wurde die Massverkörperung 15 auf die Seitenoberfläche 2.1 der jeweiligen Führungsschiene 2 jeweils mit demselben Kurzpulslaser aufgebracht, welcher zur Realisierung der in Fig. 4-7 dargestellten Massverkörperung 15 diente (bei Verwendung derselben Betriebsparameter des Kurzpulslasers).

Der Laserstrahl hatte demnach ein kreisrundes Profil und wurde auf die Seitenoberfläche 2.1 der jeweiligen Führungsschiene 2 derart appliziert, dass ein einzelner Lichtpuls des Laserstrahls auf der Seitenoberfläche 2.1 der jeweiligen Führungsschiene einen Teilbereich mit einem Durchmesser D von ca. 8 $\mu$m bestrahlte. Die Markierungs-bereiche der jeweiligen Massverkörperung 15 wurden entsprechend dem in Fig. 3B dargestellten Beispiel bereitgestellt, wobei die Parameter D und $\Delta$X wie folgt gewählt wurden: D = 8 $\mu$m und $\Delta$X = 5 $\mu$m. Die erste Spur SP1 der jeweiligen Massverkörperung 15 wurde dabei jeweils derart realisiert, dass die einzelnen Markierungsbereiche M und die einzelnen Spiegelbereiche S der Massverkörperung 15 in Längsrichtung der Massverkörperung 15 jeweils eine Erstreckung von ca. 100 $\mu$m aufweisen.

Jede einzelne der derart auf Seitenoberflächen 2.1 verschiedener Führungsschienen bereitgestellten Massverkörperungen 15 wurde anschliessend mit einer in Fig. 1 dargestellten Sensorvorrichtung 20 kombiniert, um ein in Fig. 1 dargestelltes Wegmesssystem 10 zu bilden.

Zur Charakterisierung jeder einzelnen der derart auf Seitenoberflächen 2.1 verschiedener Führungsschienen 2 bereitgestellten Massverkörperungen 15 wurde jede einzelne dieser Massverkörperungen 15 mit der Sensorvorrichtung 20 optisch abgetastet, wobei die Sensorvorrichtung 20 (wie im Zusammenhang mit Fig. 1 beschrieben) in Längsrichtung der jeweiligen Massverkörperung 15 bewegt wurde, die jeweilige Massverkörperung 15 dabei mit einem von der Lichtquelle 22 abgestrahlten Lichtstrahl 22.1 beleuchtet wurde und das an den jeweiligen Spiegelbereichen der ersten Spur SP1 reflektierte Licht RL1 mithilfe der Fotosensoren der ersten Anordnung 25.1 von Fotosensoren des elektronischen Lichtsensor-Chips 25 erfasst wurde.

Die erste Anordnung 25.1 von Fotosensoren war hierbei derart ausgebildet, dass die Fotosensoren der ersten Anordnung 25.1 von Fotosensoren bei einer Bewegung der Sensorvorrichtung 20 in der Längsrichtung der jeweiligen Massverkörperung 15 jeweils ein Ausgangssignal erzeugen, welches als Funktion der Position der Sensorvorrichtung 20 mit Bezug auf die Längsrichtung der Massverkörperung 15 periodisch zwischen einem maximalen Signal-Wert Smax und einem minimalen Signal-Wert Smin variiert, mit einer periodischen Variation, welche dem Verlauf einer mathematischen Sinus-Funktion bzw. Cosinus-Funktion entspricht. Zur Charakterisierung dieser periodischen Variation des jeweiligen Ausgangssignals eines der Fotosensoren der ersten Anordnung 25.1 von Fotosensoren ist es zweckmässig, einen "Signal-Kontrast" K des jeweiligen Ausgangssignals eines der Fotosensoren der ersten Anordnung 25.1 von Fotosensoren zu bestimmen, welcher in diesem Zusammenhang als das Verhältnis aus der "Amplitude" (Smax-Smin)/2 der Variation des jeweiligen Ausgangssignals als Funktion der Position der Sensorvorrichtung 20 mit Bezug auf die Längsrichtung der Massverkörperung 15 und der Differenz zwischen einem "Mittelwert" **(d.h.** (Smax+Smin)/2) des jeweiligen Ausgangssignals und einem "Basis-Ausgangssignal" S0 des jeweiligen Fotosensors, **d.h.** dem Ausgangssignal des jeweiligen Fotosensors gemessen unter der Bedingung dass die Lichtquelle 22 ausgeschaltet ist und somit keinen Lichtstrahl zur Beleuchtung der Massverkörperung 15 erzeugt, definiert werden kann, **d.h.** der Signal-Kontrast K des jeweiligen Ausgangssignals eines der Fotosensoren der ersten Anordnung 25.1 wird berechnet als

$$K = (Smax - Smin)/(Smax + Smin - 2 * S0).$$

Der Signal-Kontrast K nimmt in der Regel einen Wert zwischen 0 und 1 an.

Die Rauigkeit, welche eine Seitenoberfläche 2.1 einer Führungsschiene 2 vor dem Aufbringen einer Massverkörperung 15 auf die Seitenoberfläche 2.1 gemäss dem beschriebenen Verfahren aufweist, hat einen deutlich messbaren Einfluss auf die Grösse des vorstehend genannten "Signal-Kontrasts" K des jeweiligen Ausgangssignals eines der Fotosensoren der ersten Anordnung 25.1 von Fotosensoren der Sensorvorrichtung 20.

Im Falle der Massverkörperung 15, welche gemäss dem beschriebenen Verfahren auf eine Seitenoberfläche 2.1 der Führungsschiene 2 aufgebracht wurde, welche vor dem Aufbringen der Massverkörperung 15 lediglich standardmässig geschliffen, aber (nach dem standardmässigen Schleifen) nicht poliert wurde, zeigten die jeweiligen Ausgangssignale der Fotosensoren der ersten Anordnung 25.1 von Fotosensoren der Sensorvorrichtung 20 beim optischen Abtasten der ersten Spur SP1 der Massverkörperung 15 einen Signal-Kontrast K=0.29.

Im Falle der Massverkörperungen 15, welche gemäss dem beschriebenen Verfahren auf eine Seitenoberfläche 2.1 von Führungsschienen 2 aufgebracht wurden, welche vor dem Aufbringen der jeweiligen Massverkörperung 15 zunächst standardmässig geschliffen und anschliessend (nach dem standardmässigen Schleifen) zusätzlich poliert wurden, zeigten die jeweiligen Ausgangssignale der Fotosensoren der ersten Anordnung 25.1 von Fotosensoren der Sensorvorrichtung 20 beim optischen Abtasten der ersten Spur SP1 der jeweiligen Massverkörperung 15 jeweils einen Signal-Kontrast K im Bereich von 0.5 bis 0.65 (abhängig vom jeweils angewendeten Verfahren zum Polieren der Seitenoberfläche 2.1 der jeweiligen Führungsschiene 2 und dementsprechend von der Grösse der durch das Polieren jeweils erzielten Reduktion der Rauigkeit der jeweiligen Seitenoberfläche **2.1,** auf welche die jeweilige Massverkörperung 15 gemäss dem beschriebenen Verfahren aufgebracht wurde).

Dementsprechend kann durch ein Polieren der Seitenoberfläche 2.1 vor dem Aufbringen der jeweiligen Massverkörperung 15 der Signal-Kontrast K der Ausgangssignale der Fotosensoren der ersten Anordnung 25.1 von Fotosensoren der Sensorvorrichtung 20 beim optischen Abtasten der ersten Spur SP1 der jeweiligen Massverkörperung 15 deutlich gesteigert werden. Die jeweilige Grösse des vorstehend genannten Signal-Kontrasts K ist relevant für die Messgenauigkeit des in Fig. 1 dargestellten Wegmesssystems 10 bzw. des in Fig. 1 dargestellten Linear-Encoders 11: Je grösser der Signal-Kontrast K ist, umso grösser ist die Genauigkeit, mit welcher durch eine Auswertung der Ausgangssignale der Fotosensoren der ersten Anordnung 25.1 von Fotosensoren der Sensorvorrichtung 20 die jeweilige Position der Sensorvorrichtung 20 mit Bezug auf die Längsrichtung der jeweiligen Massverkörperung 15 ermittelt werden kann.

Wie erwähnt, ist in den vorstehend genannten Ausführungsformen der Massverkörperung 15 jeweils vorgesehen, die einzelnen Markierungsbereiche der Massverkörperung 15 auf einer Seitenoberfläche 2.1 derart bereitzustellen, dass alle mit einem einzelnen Lichtpuls bestrahlten Teilbereiche des jeweiligen Markierungsbereichs M jeweils Überlappungen UX und UY in zwei Dimensionen aufweisen(d.h. sowohl in der Längsrichtung der mindestens einen Spur als auch quer zur Längsrichtung der mindestens einen Spur). Die jeweiligen Überlappungen UX und UY zwischen den verschiedenen bestrahlten Teilbereichen haben Einfluss auf das Reflexionsvermögen der jeweiligen Markierungsbereiche M im Vergleich zum Reflexionsvermögen der einzelnen Spiegelbereiche S. Das Reflexionsvermögen der jeweiligen Markierungsbereiche M kann durch eine geeignete Wahl der Grösse der jeweiligen Überlappungen UX und UY insbesondere minimiert werden, was eine Erhöhung des jeweiligen Signal-Kontrasts K der Ausgangssignale der Fotosensoren der ersten Anordnung 25.1 von Fotosensoren der Sensorvorrichtung 20 beim optischen Abtasten der ersten Spur SP1 der jeweiligen Massverkörperung 15 ermöglicht.

Um den Einfluss der Grösse der jeweiligen Überlappungen der verschiedenen bestrahlten Teilbereiche eines Markierungsbereichs M zu charakterisieren, wurde beispielhaft der Einfluss der Grösse der Überlappung UX auf das Reflexionsvermögen der jeweiligen Markierungsbereiche M evaluiert.

Zu diesem Zweck wurden auf einer Seitenoberfläche 2.1 mittels des erfindungsgemässen Verfahrens jeweis nebeneinander drei Beispiele (im Folgenden "Beispiel 1", "Beispiel 2" und Beispiel 3") für eine erste Spur SP1 der Massverkörperung 15 der in Fig. 2 dargestellten Art hergestellt, wobei die Seitenoberfläche 2.1 vor dem Bereitstellen der Markierungsbereiche M der verschiedenen ersten Spuren SP1 im gesamten Bereich der Seitenoberfläche gleichmässig poliert wurde.

Der Laserstrahl hatte dabei ein kreisrundes Profil und wurde auf die Seitenoberfläche 2.1 derart appliziert, dass ein einzelner Lichtpuls des Laserstrahls auf der Seitenoberfläche 2.1 einen Teilbereich bestrahlte. Die Markierungsbereiche der jeweiligen Massverkörperung 15 wurden entsprechend dem in Fig. 3B dargestellten Beispiel bereitgestellt, wobei die Parameter D und $\Delta Y$ wie folgt gewählt wurden: D = 15.2 $\mu$m und $\Delta Y$ = 5 $\mu$m. Die erste Spur SP1 der jeweiligen Massverkörperung 15 wurde dabei jeweils derart realisiert, dass die einzelnen Markierungsbereiche M und die einzelnen Spiegelbereiche S der Massverkörperung 15 in Längsrichtung der Massverkörperung 15 jeweils eine Erstreckung von ca. 100 $\mu$m aufweisen.

Die vorstehend genannten Ausführungsformen der ersten Spur SP1 gemäss Beispiel 1, Beispiel 2 bzw. Beispiel 3 sind dementsprechend identisch hinsichtlich des Abstandes $\Delta Y$, welcher massgeblich die Erstreckung DUY der Überlappung UY der mit einem Laserpuls bestrahlten Teilbereiche jeweils quer zur Richtung der X-Achse bzw. quer zur Längsrichtung der ersten Spur SP1 bestimmt (im vorliegenden Fall beträgt DUY = D-$\Delta Y$ = 10.2 $\mu$m).

Die vorstehend genannten Ausführungsformen der ersten Spur SP1 gemäss Beispiel 1, Beispiel 2 bzw. Beispiel 3 unterschieden sich hinsichtlich des Abstandes $\Delta X$, welcher massgeblich die Erstreckung DUX der Überlappung UX in Richtung der X-Achse bzw. in der Längsrichtung der ersten Spur SP1 bestimmt. Dabei wurden $\Delta X$ wie folgt gewählt: $\Delta X$= 5 $\mu$m für Beispiel 1; $\Delta X$= 8 $\mu$m für Beispiel 2 bzw. $\Delta X$= 15.2 $\mu$m für Beispiel 3.

Die vorstehend genannten Ausführungsformen der ersten Spur SP1 gemäss Beispiel 1, Beispiel 2 bzw. Beispiel 3 wurden jeweils mit der vorstehend beschriebenen Sensorvorrichtung 20 abgetastet und für jede dieser Ausführungsformen die jeweiligen Ausgangssignale der Fotosensoren der ersten Anordnung 25.1 von Fotosensoren der Sensorvorrichtung 20 beim optischen Abtasten der ersten Spur SP1 der Massverkörperung 15 gemessen. Dabei wurde für jede der genannten Ausführungsformen der ersten Spur SP1 gemäss Beispiel 1, Beispiel 2 bzw. Beispiel 3 jeweils der Signal-Kontrast K des jeweiligen Ausgangssignals eines der Fotosensoren der ersten Anordnung 25.1 von Fotosensoren der Sensorvorrichtung 20 ermittelt. In der nachstehenden Tabelle 1 sind für die vorstehend genannten Ausführungsformen der ersten Spur SP1 gemäss Beispiel 1, Beispiel 2 bzw. Beispiel 3 die jeweils ermittelten Werte für den Signal-Kontrast K, den Abstand $\Delta X$ und die Erstreckung DUX der Überlappung UX in Richtung der X-Achse bzw. in der Längsrichtung der ersten Spur SP1 angegeben.

Tabelle 1:

|  | D [$\mu$m] | $\Delta X$ [$\mu$m] | DUX [$\mu$m] | K (%) |
|---|---|---|---|---|
| Beispiel 1 | 15.2 | 5 | 10.2 | 61.4 |
| Beispiel 2 | 15.2 | 8 | 7.2 | 53.6 |
| Beispiel 3 | 15.2 | 15.2 | 0 | 51.6 |

Wie aus Tabelle 1 ersichtlich, sind im Falle des Beispiels 3 in einem Markierungsbereiche M die verschiedenen mit einem Laserpuls bestrahlten Teilbereiche derart verteilt, dass die verschiedenen Teilbereiche keine Überlappung UX in der Längsrichtung der ersten Spur SP1 aufweisen (d.h. DUX = 0). Hingegen liegt im Falle des Beispiels 1 und des Beispiels 2 jeweils eine Überlappung UX mit DUX > 0 vor.

Wie aus Tabelle 1 ersichtlich, ist der Signal-Kontrast K für die Beispiele 1 und 2 jeweils grösser als der entsprechende Wert für den Signal-Kontrast K für das Beispiel 3. Im Vergleich zum Beispiel 3 (mit DUX = 0) führt demnach eine Vergrösserung der Erstreckung DUX der Überlappung UX in der Längsrichtung der ersten Spur SP1 zu einer Erhöhung des Signal-Kontrasts K und somit zu einer Reduktion des Reflexionsvermögens eines Markierungsbereichs M.

Es sei darauf hingewiesen, dass es als Alternative zu dem vorstehend genannten Kurzpulslaser auch denkbar ist, einen Ultrakurzpulslaser mit einer Pulsdauer im Pikosekunden-Bereich, beispielsweise mit einer Pulsdauer kleiner 10 Pikosekunden, zu verwenden, um eine Massverkörperung erfindungsgemäss auf eine Oberfläche einer Führungsschiene aufzubringen. Die Verwendung eines derartigen Ultrakurzpulslasers ermöglicht ein Aufbringen der Massverkörperung mit einer reduzierten thermischen Beanspruchung der mit Lichtpulsen bestrahlten Oberflächenbereiche. Dies resultiert in dem Vorteil, dass nach dem Aufbringen der Massverkörperung auf eine Durchführung des oben beschriebenen Verfahrens zur Reinigung und Passivierung verzichtet werden kann.

Mit Bezug auf Fig. 1 sei darauf hingewiesen, dass die Führungsschiene 2 mit mindestens einer und vorzugsweise mit einer Vielzahl von - von der zweiten Seitenoberfläche 2.2 ausgehenden - Sackbohrungen mit vorzugsweise einem Innengewinde ausgestattet werden kann, wobei die erste Seitenoberfläche 2.1 der Führungsschiene 2 insbesondere ohne Bohrungen ausgebildete sein kann. Letzteres ermöglicht eine Befestigung der Führungsschiene 2 an einer beliebigen Struktur mithilfe der vorstehend genannten (in Fig. 1 nicht dargestellten) Sackbohrungen, wobei die gesamte Fläche der ersten Seitenoberfläche 2.1 lückenlos für die Ausbildung der Massverkörperung zur Verfügung steht.

## Patentansprüche

1. Verfahren zum Aufbringen einer Massverkörperung (15) auf eine Oberfläche einer Führungsschiene (2) einer linearen Profilschienenführung (1), wobei die Führungsschiene (2) eine erste Seitenoberfläche (2.1) und eine gegenüberliegende zweite Seitenoberfläche (2.2) aufweist, wobei die Massverkörperung (15) mindestens eine sich linear in Längsrichtung (X) der Führungsschiene (2) erstreckende Spur (SP1, SP2) mit mehreren hintereinander alternierend angeordneten Spiegelbereichen (S; S1, S2, S3, S4, S5, S6, S7, S8, S9, S10, S11, S12, S13, S14, S15) und Markierungsbereichen (M; M1, M2, M3, M4, M5, M6, M7, M8, M9, M10, M11, M12, M13, M14) umfasst, wobei jeder der Markierungsbereiche sich linienartig quer zur Längsrichtung (X) der mindestens einen Spur (SP1, SP2) erstreckt, und wobei das Verfahren die folgenden Verfahrensschritte aufweist:

   - Bereitstellen eines gepulsten Lasers zum Erzeugen eines Laserstrahls; und
   - Bereitstellen mindestens eines der Markierungsbereiche (M; M1, M2, M3, M4, M5, M6, M7, M8, M9, M10, M11, M12, M13, M14) durch Einbringen einer Mikrostruktur in einem dem mindestens einen Markierungsbereich entsprechenden ersten Bereich (B1) der ersten Seitenoberfläche (2.1) der Führungsschiene (2), indem:

      der Laser den Laserstrahl mit einer Folge von mehreren Lichtpulsen erzeugt und der Laserstrahl derart auf den ersten Bereich (B1, B2) der ersten Seitenoberfläche (2.1) gerichtet wird, dass mittels jedes einzelnen Lichtpulses der erzeugten Folge von mehreren Lichtpulsen lediglich ein Teilbereich (TB11, TB15, TB16, TB1n, TB21, TB25, TB26, TB2n) des ersten Bereichs (B1) derart bestrahlt wird, dass die erste Seitenoberfläche (2.1) in dem vom jeweiligen einzelnen Lichtpuls bestrahlten Teilbereich (TB11, TB15, TB16, TB1n, TB21, TB25, TB26, TB2n) des ersten Bereichs (B1) aufgrund der Bestrahlung mit dem jeweiligen einzelnen Lichtpuls derart verändert wird, dass die erste Seitenoberfläche (2.1) nach der Bestrahlung mit dem jeweiligen einzelnen Lichtpuls eine räumliche Modulation der ersten Seitenoberfläche (2.1) aufweist, welche sich über den von dem jeweiligen einzelnen Lichtpuls bestrahlten Teilbereich (TB11, TB15, TB16, TB1n, TB21, TB25, TB26, TB2n) des ersten Bereichs (B1) erstreckt, wobei die räumliche Erstreckung (D) des von dem jeweiligen einzelnen Lichtpuls bestrahlten Teilbereichs des ersten Bereichs (B1) in der Längsrichtung (X) der mindestens einen Spur kleiner als die räumliche Erstreckung (DBX) des ersten Bereichs (B1) in der Längsrichtung (X) der mindestens einen Spur (SP1, SP2) ist und die räumliche Erstreckung (D) des von dem jeweiligen einzelnen Lichtpuls bestrahlten Teilbereichs quer zur Längsrichtung (X) der mindestens einen Spur (SP1, SP2) kleiner als die räumliche Erstreckung (DBY) des ersten Bereichs (B1) quer zu der Längsrichtung (X) der mindestens einen Spur (SP1, SP2) ist;
      der Laserstrahl relativ zur Führungsschiene (2) bewegt wird, sodass zumindest mehrere der Lichtpulse der erzeugten Folge von mehreren Lichtpulsen zeitlich nacheinander mehrere verschiedene Teilbereiche (TB11, TB15, TB16, TB1n, TB21, TB25, TB26, TB2n) des ersten Bereichs bestrahlen, welche relativ zueinander räumlich verteilt angeordnet sind,
      wobei zu jedem einzelnen der mehreren verschiedenen bestrahlten Teilbereiche (TB15) mindestens zwei andere der mehreren verschiedenen bestrahlten Teilbereiche (TB16, TB25) vorhanden sind, welche zu dem jeweiligen einzelnen der mehreren verschiedenen bestrahlten Teilbereiche (TB15) derart räumlich versetzt sind, dass
      einer der mindestens zwei anderen der mehreren verschiedenen bestrahlten Teilbereiche (TB16) relativ zu dem jeweiligen einzelnen der mehreren verschiedenen bestrahlten Teilbereiche (TB15) quer zu der Längsrichtung (X) der mindestens einen Spur (SP1, SP2) versetzt ist, sodass der eine der mindestens zwei anderen der mehreren verschiedenen bestrahlten Teilbereiche (TB16) und der jeweilige einzelne der mehreren verschiedenen bestrahlten Teilbereiche (TB15) eine Überlappung (UY) aufweisen,
      wobei die mehreren verschiedenen bestrahlten Teilbereiche zusammen einen Bereich der ersten Seitenoberfläche bilden, welcher mit dem ersten Bereich (B1) deckungsgleich ist,
      **dadurch gekennzeichnet, dass** der andere der mindestens zwei anderen der mehreren verschiedenen bestrahlten Teilbereiche (TB25) relativ zu dem jeweiligen einzelnen der mehreren verschiedenen bestrahlten Teilbereiche (TB15) in der Längsrichtung (X) der mindestens einen Spur (SP1, SP2) versetzt ist, sodass der andere der mindestens zwei anderen der mehreren verschiedenen bestrahlten Teilbereiche (TB25) und der jeweilige einzelne der mehreren verschiedenen bestrahlten Teilbereiche (TB15) eine Überlappung (UX) aufweisen.

2. Verfahren nach Anspruch 1,
   wobei das Verfahren ferner die folgenden Verfahrensschritte aufweist:

   - vor dem Einbringen der Mikrostruktur in die erste Seitenoberfläche (2.1) der Führungsschiene (2) mit dem gepulsten Laserstrahl wird zumindest die erste Seitenoberfläche der Führungsschiene derart einer Oberflächenbehandlung unterzogen, dass insbesondere geringfügig Material von der ersten Seitenoberfläche der Führungsschiene abgetragen wird; und
   - nach dem Einbringen der Mikrostruktur in die erste Seitenoberfläche der Führungsschiene mit dem Laserstrahl wird zumindest die erste Seitenoberfläche der Führungsschiene einer Oberflächenreinigung unterzogen.

3. Verfahren nach Anspruch 1 oder 2,

   wobei die Überlappung (UX) zwischen dem jeweiligen einzelnen der mehreren verschiedenen bestrahlten Teilbereiche (TB11, TB1n) und dem mindestens einen anderen der mehreren verschiedenen bestrahlten Teilbereiche (TB21, TB2n) in der Längsrichtung (X) der mindestens einen Spur (SP1, SP2) eine räumliche Erstreckung (DUX) aufweist, welche 20-50 % der räumlichen Erstreckung (D) des von dem jeweiligen einzelnen Lichtpuls bestrahlten Teilbereichs des ersten Bereichs in der Längsrichtung (X) der mindestens einen Spur (SP1, SP2) beträgt, und/oder
   wobei die Überlappung (UY) zwischen dem jeweiligen einzelnen der mehreren verschiedenen bestrahlten Teilbereiche (TB15) und dem mindestens einen anderen der mehreren verschiedenen bestrahlten Teilbereiche (TB16) quer zur Längsrichtung (X) der mindestens einen Spur (SP1, SP2) eine räumliche Erstreckung (DUY) aufweist, welche 20-50 % der räumlichen Erstreckung (D) des von dem jeweiligen einzelnen Lichtpuls bestrahlten Teilbereichs des ersten Bereichs quer zu der Längsrichtung (X) der mindestens einen Spur (SP1, SP2) beträgt.

4. Verfahren nach einem der Ansprüche 1 bis 3,

   wobei der Laser als Kurzpulslaser zur Erzeugung gepulsten Laserlichts mit Lichtpulsen mit Pulsdauern kleiner 15 Nanosekunden oder als Ultrakurzpulslaser zur Erzeugung gepulsten Laserlichts mit Lichtpulsen mit Pulsdauern kleiner 20 Pikosekunden ausgebildet ist; und/oder
   wobei die Pulsparameter des Lasers und/oder ein Laserfokus derart gewählt werden/wird, dass beim Einbringen der Mikrostruktur in die erste Seitenoberfläche (2.1) der Führungsschiene (2) ohne Materialabtrag oder zumindest ohne wesentlichen Materialabtrag entlang der Oberflächenbahnen eine Material-Aufrauung im Nanometerbereich gebildet wird.

5. Verfahren nach einem der Ansprüche 1 bis 4,

   wobei vor dem Einbringen der Mikrostruktur in die erste Seitenoberfläche (2.1) der Führungsschiene (2) mit dem gepulsten Laserstrahl zumindest die erste Seitenoberfläche der Führungsschiene durch Polieren der Oberflächenbehandlung unterzogen wird; und/oder
   wobei vor dem Einbringen der Mikrostruktur in die erste Seitenoberfläche der Führungsschiene mit dem gepulsten Laserstrahl zumindest die erste Seitenoberfläche (2.1) der Führungsschiene (2) derart der Oberflächenbehandlung unterzogen wird, dass die erste Seitenoberfläche (2.1) der Führungsschiene (2) einen Mittenrauwert (Ra) von maximal 0,3 $\mu$m, vorzugsweise einen Mittenrauwert (Ra) von maximal 0,1 $\mu$m, und noch bevorzugter einen Mittenrauwert (Ra) in einem Bereich von etwa 0,007 $\mu$m bis 0,1 $\mu$m aufweist.

6. Verfahren nach einem der Ansprüche 1 bis 5,
   wobei vor dem Einbringen der Mikrostruktur in die erste Seitenoberfläche (2.1) der Führungsschiene (2) mit dem gepulsten Laserstrahl zumindest die erste Seitenoberfläche der Führungsschiene der Oberflächenbehandlung mittels Polierscheiben, mittels Laserpolieren und/oder mittels Elektropolieren unterzogen wird.

7. Verfahren nach einem der Ansprüche 1 bis 6,

wobei nach dem Einbringen der Mikrostruktur in die erste Seitenoberfläche (2.1) der Führungsschiene (2) die erste Seitenoberfläche (2.1) der Führungsschiene (2) in einem der Markierungsbereiche (M; M1, M2, M3, M4, M5, M6, M7, M8, M9, M10, M11, M12, M13, M14) der Massverkörperung (15) einen Mittenrauwert (Ra) aufweist, welcher um mehr als einen Faktor 10 grösser ist als der Mittenrauwert der Seitenoberfläche (2.1) in einem der Spiegelbereiche (S; S1, S2, S3, S4, S5, S6, S7, S8, S9, S10, S11, S12, S13, S14, S15) der Massverkörperung (15).

8. Verfahren nach einem der Ansprüche 1 bis 7,
wobei nach dem Einbringen der Mikrostruktur in die erste Seitenoberfläche (2.1) der Führungsschiene (2) mit dem Laserstrahl die erste Seitenoberfläche (2.1) der Führungsschiene (2) einer Oberflächenreinigung unterzogen wird, wobei es sich bei der Oberflächenreinigung um eine Laserbehandlung und/oder eine Vibrationsreinigung oder eine Beaufschlagung der ersten Seitenoberfläche mit Ultraschall handelt.

9. Verfahren nach einem der Ansprüche 1 bis 8,

wobei der Laserstrahl ein im Wesentlichen rundes Strahlenbündel aufweist und derart gewählt wird, dass das Strahlenbündel auf der ersten Seitenoberfläche der Führungsschiene einen Durchmesser von 3,5 µm bis 12 µm, vorzugsweise 6 µm bis 9 µm, und insbesondere etwa 8 µm, aufweist; und/oder
wobei der Laser mit einer Pulsfrequenz von etwa 60 kHz betrieben wird.

10. Massverkörperung (15) für einen Linear-Encoder (11), welcher Linear-Encorder (11) eine Führungsschiene (2) einer linearen Profilschienenführung (1) umfasst, wobei die Führungsschiene (2) eine erste Seitenoberfläche (2.1) und eine gegenüberliegende zweite Seitenoberfläche (2.2) aufweist,

wobei die Massverkörperung (15) mindestens eine sich linear in Längsrichtung (X) der Führungsschiene (2) erstreckende Spur (SP1, SP2) mit mehreren hintereinander alternierend angeordneten Spiegelbereichen (S; S1, S2, S3, S4, S5, S6, S7, S8, S9, S10, S11, S12, S13, S14, S15) und Markierungsbereichen (M; M1, M2, M3, M4, M5, M6, M7, M8, M9, M10, M11, M12, M13, M14) umfasst, wobei jeder der Markierungsbereiche (M; M1, M2, M3, M4, M5, M6, M7, M8, M9, M10, M11, M12, M13, M14) sich linienartig quer zur Längsrichtung (X) der mindestens einen Spur (SP1, SP2) erstreckt und dazu ausgebildet ist, einfallendes Licht zu absorbieren und/oder diffus zu reflektieren, wobei die Spiegelbereiche (S; S1, S2, S3, S4, S5, S6, S7, S8, S9, S10, S11, S12, S13, S14, S15) eine zumindest im Wesentlichen glatte Oberfläche aufweisen, welche dazu ausgebildet ist, einfallendes Licht spiegelnd zu reflektieren,
**dadurch gekennzeichnet, dass**
die Massverkörperung (15) auf die erste Seitenoberfläche (2.1) der Führungsschiene (2) gemäß dem Verfahren nach einem der Ansprüche 1 bis 9 aufgebracht ist.

11. Massverkörperung (15) nach Anspruch 10,
wobei die Führungsschiene (2) mindestens eine und vorzugsweise eine Vielzahl von - von der zweiten Seitenoberfläche (2.2) ausgehende - Sackbohrungen mit vorzugsweise einem Innengewinde aufweist, und wobei die erste Seitenoberfläche (2.1) der Führungsschiene (2) insbesondere ohne Bohrungen versehen ist.

12. Massverkörperung (15) nach einem der Ansprüche 10 bis 11,

wobei die mindestens eine Spur (SP1) als Inkrementalspur mit einer Mehrzahl von äquidistant angeordneten Markierungsbereichen (M) ausgebildet ist oder
die mindestens eine Spur (SP2) als Referenzspur mit mindestens einem Markierungsbereich (M1, M2, M3, M4, M5, M6, M7, M8, M9, M10, M11, M12, M13, M14) zur Codierung mindestens einer Referenzposition ausgebildet ist.

13. Linear-Encoder (11), welcher folgendes aufweist:

- eine Massverkörperung (15) nach einem der Ansprüche 10 bis 12; und
- mindestens eine Sensorvorrichtung (20), welche dazu ausgebildet ist die mindestens eine Spur (SP1, SP2) der Massverkörperung (15) optisch abzutasten,

wobei die mindestens eine Sensorvorrichtung (22) einen relativ zu der Massverkörperung (15) bewegbaren Messkopf (21) umfasst, welcher aufweist:

eine Lichtquelle (22) zum Abstrahlen von Licht (22.1) auf Spiegelbereiche (S; S1, S2, S3, S4, S5, S6, S7, S8, S9, S10, S11, S12, S13, S14, S15) und Markierungsbereiche (M; M1, M2, M3, M4, M5, M6, M7, M8, M9, M10, M11, M12, M13, M14) der Massverkörperung (15) und

mindestens eine Anordnung von Fotosensoren (25.1, 25.2), welche ausgebildet sind, von der Lichtquelle (22) abgestrahltes und an Spiegelbereichen (S; S1, S2, S3, S4, S5, S6, S7, S8, S9, S10, S11, S12, S13, S14, S15) der Massverkörperung (15) reflektiertes Licht (RL1, RL2) zu erfassen.

**Claims**

1. A method for applying a measurement scale (15) to a surface of a guide rail (2) of a linear profile rail guide (1), wherein the guide rail (2) has a first side surface (2.1) and an opposite second side surface (2.2), wherein the measurement scale (15) comprises at least one track (SP1, SP2), which extends linearly in the longitudinal direction (X) of the guide rail (2) and comprises several mirror regions (S; S1, S2, S3, S4, S5, S6, S7, S8, S9, S10, S11, S12, S13, S14, S15) and marking regions (M; M1, M2, M3, M4, M5, M6, M7, M8, M9, M10, M11, M12, M13, M14) arranged one behind another in an alternating manner, wherein each of the marking regions extends in a line-like manner transverse to the longitudinal direction (X) of the at least one track (SP1, SP2), and wherein the method has the following method steps:

   - providing a pulsed laser for generating a laser beam; and
   - providing at least one of the marking regions (M; M1, M2, M3, M4, M5, M6, M7, M8, M9, M10, M11, M12, M13, M14) by introducing a microstructure in a first region (B1), which corresponds to the at least one marking region, of the first side surface (2.1) of the guide rail (2), in that:

      the laser generates the laser beam with a sequence of several light pulses, and the laser beam is directed at the first region (B1, B2) of the first side surface (2.1) in such a way that only a subregion (TB11, TB15, TB16, TB1n, TB21, TB25, TB26, TB2n) of the first region (B1) is irradiated by means of each individual light pulse of the generated sequence of several light pulses in such a way that the first side surface (2.1) in the subregion (TB11, TB15, TB16, TB1n, TB21, TB25, TB26, TB2n) of the first region (B1), which is irradiated by means of the respective individual light pulse, is changed due to the irradiation by means of the respective individual light pulse in such a way that after the irradiation by means of the respective individual light pulse, the first side surface (2.1) has a spatial modulation of the first side surface (2.1), which extends over the subregion (TB11, TB15, TB16, TB1n, TB21, TB25, TB26, TB2n) of the first region (B1), which is irradiated by means of the respective individual light pulse, wherein the spatial extension (D) of the subregion of the first region (B1), which is irradiated by means of the respective individual light pulse, in the longitudinal direction (X) of the at least one track is smaller than the spatial extension (DBX) of the first region (B1) in the longitudinal direction (X) of the at least one track (SP1, SP2), and the spatial extension (D) of the subregion irradiated by means of the respective individual light pulse transverse to the longitudinal direction (X) of the at least one track (SP1, SP2) is smaller than the spatial extension (DBY) of the first region (B1) transverse to the longitudinal direction (X) of the at least one track (SP1, SP2);

      the laser beam is moved relative to the guide rail (2), so that at least several of the light pulses of the generated sequence of several light pulses irradiate several different subregions (TB11, TB15, TB16, TB1n, TB21, TB25, TB26, TB2n) of the first region, which are arranged spatially distributed to one another, sequentially in time,

      wherein for each individual one of the several different irradiated subregions (TB15), at least two other ones of the several different irradiated subregions (TB16, TB25) are present, which are offset to the respective individual one of the several different irradiated subregions (TB15) in such a way that

      one of the at least two other ones of the several different irradiated subregions (TB16) is offset relative to the respective individual one of the several different irradiated subregions (TB15) transverse to the longitudinal direction (X) of the at least one track (SP1, SP2) so that the one of the at least two other ones of the several different irradiated subregions (TB16) and the respective individual one of the several different irradiated subregions (TB15) have an overlap (UY), and

      wherein the several different irradiated subregions together form a region of the first side surface, which is congruent with the first region (B1),

      **characterized in that**

      the other one of the at least two other ones of the several different irradiated subregions (TB25) is offset relative to the respective individual one of the several different irradiated subregions (TB15) in the longitudinal direction (X) of the at least one track (SP1, SP2) so that the other one of the at least two other ones of the several different irradiated subregions (TB25) and the respective individual one of the several different irradiated subregions (TB15) have an overlap (UX),

2. The method according to claim 1,
   wherein the method further has the following method steps:

   - prior to the introduction of the microstructure into the first side surface (2.1) of the guide rail (2) by means of the pulsed laser beam, at least the first side surface of the guide rail is subjected to a surface treatment in such a way that little material is in particular removed from the first side surface of the guide rail; and
   - after the introduction of the microstructure into the first side surface of the guide rail by means of the laser beam, at least the first side surface of the guide rail is subjected to a surface cleaning.

3. The method according to claim 1 or 2,

   wherein the overlap (UX) between the respective individual one of the several different irradiated subregions (TB11, TB1n) and the at least one other one of the several different irradiated subregions (TB21, TB2n) in the longitudinal direction (X) of the at least one track (SP1, SP2) has a spatial extension (DUX), which is 20-50% of the spatial extension (D) of the subregion of the first region, which is irradiated by means of the respective individual light pulse, in the longitudinal direction (X) of the at least one track (SP1, SP2), and/or
   wherein the overlap (UY) between the respective individual one of the several different irradiated subregions (TB15) and the at least one other one of the several different irradiated subregions (TB16) transverse to the longitudinal direction (X) of the at least one track (SP1, SP2) has a spatial extension (DUY), which is 20-50% of the spatial extension (D) of the subregion of the first region, which is irradiated by means of the respective individual light pulse, transverse to the longitudinal direction (X) of the at least one track (SP1, SP2).

4. The method according to one of claims 1 to 3,

   wherein the laser is formed as short-pulse laser for generating pulsed laser light by means of light pulses with pulse durations of less than 15 nanoseconds or as ultra short-pulse laser for generating pulsed laser light by means of light pulses with pulse durations of less than 20 picoseconds; and/or
   wherein the pulse parameters of the laser and/or a laser focus are/is selected in such a way that a material roughening in the nanometer range is formed when introducing the microstructure into the first side surface (2.1) of the guide rail (2) without material removal or at least without significant material removal along the surface paths.

5. The method according to one of claims 1 to 4,

   wherein prior to the introduction of the microstructure into the first side surface (2.1) of the guide rail (2) by means of the pulsed laser beam, at least the first side surface of the guide rail is subjected to the surface treatment by means of polishing; and/or
   wherein prior to the introduction of the microstructure into the first side surface of the guide rail by means of the pulsed laser beam, at least the first side surface (2.1) of the guide rail (2) is subjected to the surface treatment in such a way that the first side surface (2.1) of the guide rail (2) has an average roughness value (Ra) of maximally 0.3 $\mu$m, preferably an average roughness value (Ra) of maximally 0.1 $\mu$m, and even more preferably an average roughness value (Ra) in a range of approximately 0.007 $\mu$m to 0.1 $\mu$m.

6. The method according to one of claims 1 to 5,
   wherein prior to the introduction of the microstructure into the first side surface (2.1) of the guide rail (2) by means of the pulsed laser beam, at least the first side surface of the guide rail is subjected to the surface treatment by means of polishing disks, by means of laser polishing and/or by means of electropolishing.

7. The method according to one of claims 1 to 6,
   wherein after the introduction of the microstructure into the first side surface (2.1) of the guide rail (2), the first side surface (2.1) of the guide rail (2) has, in one of the marking regions (M; M1, M2, M3, M4, M5, M6, M7, M8, M9, M10, M11, M12, M13, M14) of the measurement scale (15), an average roughness value (Ra), which is greater by more than a factor of 10 than the average roughness value of the side surface (2.1) in one of the mirror regions (S; S1, S2, S3, S4, S5, S6, S7, S8, S9, S10, S11, S12, S13, S14, S15) of the measurement scale (15).

8. The method according to one of claims 1 to 7,

wherein after the introduction of the microstructure into the first side surface (2.1) of the guide rail (2) by means of the laser beam, the first side surface (2.1) of the guide rail (2) is subjected to a surface cleaning, wherein the surface cleaning is a laser treatment and/or a vibration cleaning or an application of the first side surface with ultrasound.

9. The method according to one of claims 1 to 8,

wherein the laser beam has an essentially round beam bundle and is selected in such a way that the beam bundle on the first side surface of the guide rail has a diameter of 3.5 $\mu$m bis 12 $\mu$m, preferably 6 $\mu$m to 9 $\mu$m, and in particular approximately 8 $\mu$m; and/or
wherein the laser is operated with a pulse frequency of approximately 60 kHz.

10. A measurement scale (15) for a linear encoder (11), which linear encoder (11) comprises a guide rail (2) of a linear profile rail guide (1), wherein the guide rail (2) has a first side surface (2.1) and an opposite second side surface (2.2),

wherein the measurement scale (15) comprises at least one track (SP1, SP2) extending linearly in the longitudinal direction (X) of the guide rail (2) and comprising several mirror regions (S; S1, S2, S3, S4, S5, S6, S7, S8, S9, S10, S11, S12, S13, S14, S15) and marking regions (M; M1, M2, M3, M4, M5, M6, M7, M8, M9, M10, M11, M12, M13, M14) arranged one behind another in an alternating manner, wherein each of the marking regions (M; M1, M2, M3, M4, M5, M6, M7, M8, M9, M10, M11, M12, M13, M14) extends linearly transverse to the longitudinal direction (X) of the at least one track (SP1, SP2) and is formed to absorb incident light and/or to reflect it diffusely, wherein the mirror regions (S; S1, S2, S3, S4, S5, S6, S7, S8, S9, S10, S11, S12, S13, S14, S15), have an at least essentially smooth surface, which is formed to reflect incident light in a reflective manner,
**characterized in that**
the measurement scale (15) is applied to the first side surface (2.1) of the guide rail (2) according to the method according to one of claims 1 to 9.

11. The measurement scale (15) according to claim 10,

wherein the guide rail (2) has at least one and
preferably a plurality of blind holes - starting at the second side surface (2.2) - preferably comprising an internal thread, and wherein the first side surface (2.1) of the guide rail (2) is in particular provided without holes.

12. The measurement scale (15) according to one of claims 10 to 11,

wherein the at least one track (SP1) is formed as incremental track comprising a plurality of equidistantly arranged marking regions (M) or
the at least one track (SP2) is formed as reference track with at least one marking region (M1, M2, M3, M4, M5, M6, M7, M8, M9, M10, M11, M12, M13, M14) for encoding at least one reference position.

13. A linear encoder (11), which has the following:

- a measurement scale (15) according to one of claims 10 to 12; and
- at least one sensor device (20), which is formed to optically scan the at least one track (SP1, SP2) of the measurement scale (15),

wherein the at least one sensor device (22) has a measuring head (21), which can be moved relative to the measuring scale (15):

a light source (22) for emitting light (22.1) onto mirror regions (S; S1, S2, S3, S4, S5, S6, S7, S8, S9, S10, S11, S12, S13, S14, S15) and marking regions (M; M1, M2, M3, M4, M5, M6, M7, M8, M9, M10, M11, M12, M13, M14) of the measurement scale (15) and
at least one arrangement of photo sensors (25.1, 25.2), which are formed to detect light (RL1, RL2) emitted by the light source (22) and reflected on mirror regions (S; S1, S2, S3, S4, S5, S6, S7, S8, S9, S10, S11, S12, S13, S14, S15) of the measurement scale (15).

**Revendications**

1. Procédé destiné à l'application d'une mesure matérialisée (15) sur une surface d'un rail de guidage (2) d'un guidage à rail profilé linéaire (1), sachant que le rail de guidage (2) comporte une première surface latérale (2.1) et une deuxième surface latérale opposée (2.2), sachant que la mesure matérialisée (15) comprend au moins une piste (SP1, SP2) s'étendant de façon linéaire dans le sens longitudinal (X) du rail de guidage (2) avec plusieurs zones de réflexion (S ; S1, S2, S3, S4, S5, S6, S7, S8, S9, S10, S11, S12, S13, S14, S15) disposées en alternance les unes derrière les autres et des zones de repérage (M ; M1, M2, M3, M4, M5, M6, M7, M8, M9, M10, M11, M12, M13, M14), sachant que chacune des zones de repérage s'étend de façon linéaire transversalement au sens longitudinal (X) d'au moins une piste (SP1, SP2), et sachant que le procédé comporte les étapes suivantes :

   - préparation d'un laser pulsé pour produire un rayon laser ; et
   - préparation d'au moins une des zones de repérage (M ; M1, M2, M3, M4, M5, M6, M7, M8, M9, M10, M11, M12, M13, M14) par mise en œuvre d'une microstructure dans une première zone (B1) correspondant à au moins une zone de repérage de la première surface latérale (2.1) du rail de guidage (2) :

      le laser produisant le rayon laser avec une suite des impulsions lumineuses et le rayon laser étant orienté sur la première zone (B1, B2) de la première surface latérale (2.1) de telle manière que seule une zone partielle (TB11, TB15, TB16, TB1n, TB21, TB25, TB26, TB2n) de la première zone (B1) est balayée au moyen de chaque impulsion lumineuse individuelle de la suite produite de nombreuses impulsions lumineuses, de telle sorte que la première surface latérale (2.1) dans la zone partielle (TB11, TB15, TB16, TB1n, TB21, TB25, TB26, TB2n) balayée par l'impulsion lumineuse individuelle respective de la première zone (B1) est modifiée en raison du balayage avec l'impulsion lumineuse individuelle respective, de telle manière que la première surface latérale (2.1) comporte après le balayage avec l'impulsion lumineuse individuelle respective une modulation spatiale de la première surface latérale (2.1), laquelle s'étend sur la zone partielle (TB11, TB15, TB16, TB1n, TB21, TB25, TB26, TB2n) balayée par l'impulsion lumineuse individuelle respective de la première zone (B1), sachant que l'extension spatiale (D) de la zone partielle balayée par l'impulsion lumineuse individuelle respective de la première zone (B1) dans le sens longitudinal (X) d'au moins une piste est plus petite que l'extension spatiale (DBX) de la première zone (B1) dans le sens longitudinal (X) d'au moins une piste (SP1, SP2) et l'extension spatiale (D) de la zone partielle balayée par l'impulsion lumineuse individuelle respective transversalement au sens longitudinal (X) d'au moins une piste (SP1, SP2) est plus petite que l'extension spatiale (DBY) de la première zone (B1) transversalement au sens longitudinal (X) d'au moins une piste (SP1, SP2) ;

      le rayon laser étant déplacé par rapport au rail de guidage (2) de telle manière qu'au moins plusieurs des impulsions lumineuses de la suite produite de nombreuses impulsions lumineuses balayent dans le temps plusieurs zones partielles différentes (TB11, TB15, TB16, TB1n, TB21, TB25, TB26, TB2n) les unes après les autres de la première zone, lesquelles sont disposées réparties dans l'espace les unes par rapport aux autres,

      sachant que pour chaque zone individuelle des nombreuses zones partielles différentes balayées (TB15) il y a au moins deux autres des nombreuses zones partielles (TB16, TB25) différentes balayées, lesquelles sont décalées dans l'espace par rapport à la zone partielle individuelle respective des nombreuses zones partielles (TB15) balayées différentes de telle manière

      qu'une des au moins deux autres des nombreuses zones partielles (TB16) balayées différentes est décalée par rapport à la zone partielle individuelle respective des nombreuses zones partielles (TB15) balayées différentes transversalement au sens longitudinal (X) d'au moins une piste (SP1, SP2) de telle sorte qu'une des au moins deux autres des nombreuses zones partielles (TB16) balayées différentes et la zone partielle individuelle respective des nombreuses zones partielles (TB15) balayées différentes présentent un chevauchement (UY),

      sachant que les nombreuses zones partielles balayées différentes forment ensemble une zone de la première surface latérale, laquelle est de couverture identique à la première zone (B1),

      **caractérisé en ce que** l'autre des au moins deux autres des nombreuses zones partielles (TB25) balayées différentes est décalée par rapport à la zone partielle individuelle respective des nombreuses zones partielles (TB15) balayées différentes dans le sens longitudinal (X) d'au moins une piste (SP1, SP2) de telle sorte que l'autre des au moins deux autres des nombreuses zones partielles balayées différentes (TB25) et la zone partielle individuelle respective des nombreuses zones partielles (TB15) balayées différentes présentent un chevauchement (UX).

2. Procédé selon la revendication 1,

sachant que le procédé comporte en plus les étapes de procédé suivantes :

- avant la mise en œuvre de la microstructure dans la première surface latérale (2.1) du rail de guidage (2) avec le rayon laser pulsé, au moins la première surface latérale du rail de guidage est soumise à un traitement de surface de telle manière qu'en particulier une faible quantité de matière est enlevée de la première surface latérale du rail de guidage ; et

- après la mise en œuvre de la microstructure dans la première surface latérale du rail de guidage avec le rayon laser, au moins la première surface latérale du rail de guidage est soumise à un nettoyage de surface.

3. Procédé selon la revendication 1 ou 2,

sachant que le chevauchement (UX) entre la zone partielle individuelle respective des nombreuses zones partielles (TB11, TB1n) balayées différentes et au moins une autre des nombreuses zones partielles (TB21, TB2n) balayées différentes dans le sens longitudinal (X) d'au moins une piste (SP1, SP2) comporte une extension spatiale (DUX), laquelle représente 20 - 50 % de l'extension spatiale (D) de la zone partielle balayée par l'impulsion lumineuse individuelle respective de la première zone dans le sens longitudinal (X) d'au moins une piste (SP1, SP2) et/ou

sachant que le chevauchement (UY) entre la zone partielle individuelle respective des nombreuses zones partielles balayées différentes (TB15) et au moins une autre des nombreuses zones partielles balayées différentes (TB16) transversalement au sens longitudinal (X) d'au moins une piste (SP1, SP2) comporte une extension spatiale (DUY), laquelle représente 20 - 50 % de l'extension spatiale (D) de la zone partielle balayée par l'impulsion lumineuse individuelle respective de la première zone transversalement au sens longitudinal (X) d'au moins une piste (SP1, SP2).

4. Procédé selon l'une quelconque des revendications 1 à 3,

sachant que le laser est constitué sous la forme d'un laser à impulsions courtes pour produire de la lumière laser pulsée avec des impulsions lumineuses d'une durée d'impulsion inférieure à 15 nanosecondes ou sous la forme d'un laser à impulsions ultracourtes pour produire de la lumière laser pulsée avec des impulsions lumineuses d'une durée d'impulsion inférieure à 20 picosecondes, et/ou

sachant que les paramètres d'impulsion du laser et/ou un foyer de laser sont choisis de telle manière qu'à la mise en œuvre de la microstructure dans la première surface latérale (2.1) du rail de guidage (2), une rugosité de matière est formée dans une zone nanométrique le long des voies de surface sans enlèvement de matière ou au moins sans enlèvement de matière essentiel.

5. Procédé selon l'une quelconque des revendications 1 à 4,

sachant qu'avant la mise en œuvre de la microstructure dans la première surface latérale (2.1) du rail de guidage (2) avec le rayon laser pulsé, au moins la première surface latérale du rail de guidage est soumise au traitement de surface par polissage ; et/ou

sachant qu'avant la mise en œuvre de la microstructure dans la première surface latérale (2.1) du rail de guidage au moins la première surface latérale du rail de guidage (2) est soumise au traitement de surface, de telle manière que la première surface latérale (2.1) du rail de guidage (2) comporte un indice de rugosité moyen (Ra) maximum de 0,3 $\mu$m, de préférence un indice de rugosité moyen (Ra) maximum de 0,1 $\mu$m et de préférence encore un indice de rugosité moyen (Ra) dans une gamme d'environ 0,007 $\mu$m à 0,1 $\mu$m.

6. Procédé selon l'une quelconque des revendications 1 à 5,
sachant qu'avant la mise en œuvre de la microstructure dans la première surface latérale (2.1) du rail de guidage (2) avec le rayon laser pulsé, au moins la première surface latérale du rail de guidage est soumise au traitement de surface au moyen d'un polissage à la meule, au moyen d'un polissage au laser et/ou au moyen d'un polissage électrique.

7. Procédé selon l'une quelconque des revendications 1 à 6,
sachant qu'après la mise en œuvre de la microstructure dans la première surface latérale (2.1) du rail de guidage (2), la première surface latérale (2.1) du rail de guidage (2) comporte dans une des zones de repérage (M ; M1, M2, M3, M4, M5, M6, M7, M8, M9, M10, M11, M12, M13, M14) de la mesure matérialisée (15), un indice de rugosité moyen (Ra) lequel est supérieur d'un facteur de 10 à l'indice de rugosité moyen de la surface latérale (2.1) dans une des zones de réflexion (S ; S1, S2, S3, S4, S5, S6, S7, S8, S9, S10, S11, S12, S13, S14, S15) de la mesure matérialisée (15).

**8.** Procédé selon l'une quelconque des revendications 1 à 7,
sachant qu'après la mise en œuvre de la microstructure dans la première surface latérale (2.1) du rail de guidage (2) avec le rayon laser, la première surface latérale (2.1) du rail de guidage (2) est soumise à un nettoyage de surface, sachant qu'il s'agit pour le nettoyage de surface d'un traitement au laser et/ou d'un nettoyage par vibration ou d'une application d'ultrasons à la première surface latérale.

**9.** Procédé selon l'une quelconque des revendications 1 à 8,

sachant que le rayon laser comporte un faisceau de rayons pour l'essentiel rond et est choisi de telle manière que le faisceau de rayons comporte sur la première surface latérale du rail de guidage un diamètre de 3,5 $\mu$m à 12 $\mu$m, de préférence 6 $\mu$m à 9 $\mu$m et en particulier d'environ 8 $\mu$m ; et/ou
sachant que le laser est actionné avec une fréquence d'impulsion d'environ 60 kHz.

**10.** Mesure matérialisée (15) pour un codeur linéaire (11), lequel codeur linéaire (11) comprend un rail de guidage (2) d'un guidage à rail profilé linéaire (1), sachant que le rail de guidage (2) comporte une première surface latérale (2.1) et une deuxième surface latérale (2.2) opposée,

sachant que la mesure matérialisée (15) comprend au moins une piste (SP1, SP2) s'étendant de façon linéaire dans le sens longitudinal (X) du rail de guidage (2) avec plusieurs zones de réflexion (S ; S1, S2, S3, S4, S5, S6, S7, S8, S9, S10, S11, S12, S13, S14, S15) disposées en alternance les unes derrière les autres et des zones de repérage (M ; M13, M14), sachant que chacune des zones de repérage (M ; M1, M2, M3, M4, M5, M6, M7, M8, M9, M10, M11, M12, M13, M14) s'étend de façon linéaire transversalement au sens longitudinal (X) d'au moins une piste (SP1, SP2) et est constituée pour absorber la lumière incidente et/ou réfléchir de façon diffuse, sachant que les zones de réflexion (S ; S1, S2, S3, S4, S5, S6, S7, S8, S9, S10, S11, S12, S13, S14, S15) comportent une surface au moins pour l'essentiel lisse, laquelle est constituée pour réfléchir la lumière incidente par réfléchissement,
**caractérisée en ce que**
la mesure matérialisée (15) est mise en oeuvre sur la première surface latérale (2.1) du rail de guidage (2) d'après le procédé selon l'une quelconque des revendications 1 à 9.

**11.** Mesure matérialisée (15) selon la revendication 10,
sachant que le rail de guidage (2) comporte au moins un ou de préférence une pluralité de trous borgnes, en partant de la deuxième surface latérale (2.2), avec de préférence un filetage intérieur, et sachant que la première surface latérale (2.1) du rail de guidage (2) est en particulier dotée sans trous.

**12.** Mesure matérialisée (15) selon l'une quelconque des revendications 10 à 11,

sachant qu'au moins une piste (SP1) est constituée sous la forme d'une piste de progression avec une pluralité de zones de repérage (M) disposées de façon équidistante ou
qu'au moins une piste (SP2) est constituée sous la forme d'une piste de référence avec au moins une zone de repérage (M1, M2, M3, M4, M5, M6, M7, M8, M9, M10, M11, M12, M13, M14) pour la codification d'au moins une position de référence.

**13.** Codeur linéaire (11), lequel comporte les éléments suivants :

- une mesure matérialisée (15) selon l'une quelconque des revendications 10 à 12 ; et
- au moins un dispositif de détection (20), lequel est constitué pour explorer de façon optique au moins une piste (SP1, SP2) de la mesure matérialisée (15),

sachant qu'au moins un dispositif de détection (22) comprend une tête de mesure (21) mobile par rapport à la mesure matérialisée (15), laquelle comporte :

une source lumineuse (22) pour irradier de lumière (22.1) des zones de réflexion (S ; S1, S2, S3, S4, S5, S6, S7, S8, S9, S10, S11, S12, S13, S14, S15) et des zones de repérage (M ; M1, M2, M3, M4, M5, M6, M7, M8, M9, M10, M11, M12, M13, M14) de la mesure matérialisée (15), et
au moins un agencement de photodétecteurs (25.1, 25.2), lesquels sont constitués pour saisir de la lumière (RL1, RL2) projetée par la source lumineuse (22) et réfléchie sur des zones de réflexion (S ; S1, S2, S3, S4, S5, S6, S7, S8, S9, S10, S11, S12, S13, S14, S15) de la mesure matérialisée (15).

Fig. 1

Fig. 2

Fig. 3A

Fig. 3B

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2515574
- DE 102007007311
- EP 3060887 B1
- US 2007240325 A1